# EUROPEAN PATENT APPLICATION

(11) **EP 4 556 168 A1**
(43) Date of publication of application: **21.05.2025**
(21) Application number: 23867254.7
(22) Date of filing: 01.09.2023
(51) Int. Cl.: B25F 5/00, H02K 7/00, H02P 5/00

(54) **ELECTRIC TOOL**

(30) Priority: 21.09.2022 CN 202211146803; 14.07.2023 CN 202310871018; 14.07.2023 CN 202321854207 U; 14.07.2023 CN 202321870645 U; 14.07.2023 CN 202310868955
(71) Applicant: Nanjing Chervon Industry Co., Ltd., Nanjing, Jiangsu 211106 (CN)
(72) Inventor: XU, Zhongquan, Nanjing, Jiangsu 211106 (CN); ZHANG, Lunlun, Nanjing, Jiangsu 211106 (CN); FU, Xiangqing, Nanjing, Jiangsu 211106 (CN); XU, Qian, Nanjing, Jiangsu 211106 (CN); XU, Yanqing, Nanjing, Jiangsu 211106 (CN); LU, Wenjing, Nanjing, Jiangsu 211106 (CN)
(74) Representative: Sun, Yiming
(86) International application number: PCT/CN2023/116382
(87) International publication number: WO 2024/060963

(57) **Abstract**

An electric tool, comprising: an electric motor assembly (20), which is at least partially arranged in a housing (11). The electric motor assembly (20) comprises a first electric motor (21), a second electric motor (22) and a connector (23), wherein limit values of efficiencies of the electric motor assembly (20) constitute a total efficiency interval, and the portions, which have an efficiency value greater than or equal to 70%, of the electric motor assembly constitute a first efficiency interval, the ratio of the first efficiency interval to the total efficiency interval being greater than or equal to 0.5.

## Description

This application claims priority to Chinese Patent Application No. 202211146803.9 filed Sep. 21, 2022, Chinese Patent Application No. 202310871018.8 filed Jul. 14, 2023, Chinese Patent Application No. 202321854207.6 filed Jul. 14, 2023, Chinese Patent Application No. 202321870645.1 filed Jul. 14, 2023, and Chinese Patent Application No. 202310868955.8 filed Jul. 14, 2023, the disclosures of which are incorporated herein by reference in their entireties.

### TECHNICAL FIELD

The present application relates to an electric tool.

### BACKGROUND

When an electric tool in the related art is working, an output mechanism can usually work under a light load condition and a heavy load condition. In order that the electric tool can output relatively large torque to adapt to the heavy load condition, the electric tool is usually provided with an electric motor with very large power and output torque. The electric motor with large power can drive the output mechanism to drive a relatively large load. However, when the electric tool is under the light load condition, the electric motor with large power has a relatively large power consumption, causing a serious waste. Therefore, under the light load condition, the electric motor has a degraded working state, affecting a service life of the electric tool.

This part provides background information related to the present application, and the background information is not necessarily the existing art.

### SUMMARY

An object of the present application is to solve or at least alleviate part or all of the preceding problems. Therefore, the present application provides an electric tool capable of satisfying the requirement for high efficiency under both a light load condition and a heavy load condition.

In a first aspect, an example of the present application provides an electric tool. The electric tool includes a housing; an output mechanism for driving a function element that implements a set function; and an electric motor assembly disposed at least partially in the housing and including a first electric motor for outputting first torque and a first rotational speed; a second electric motor for outputting second torque and a second rotational speed; and a connector selectively allowing power transmission between the first electric motor and the second electric motor so that the electric motor assembly switches between multiple working states. The output mechanism is connected to at least one of the first electric motor, the second electric motor, and the connector. Limit values of efficiency of the electric motor assembly constitute a total efficiency interval, and efficiency values of the electric motor assembly greater than or equal to 70% constitute a first efficiency interval, where the ratio of the first efficiency interval to the total efficiency interval is greater than or equal to 0.5.

In some examples, efficiency values of the electric motor assembly greater than or equal to 50% constitute a second efficiency interval, and the ratio of the first efficiency interval to the second efficiency interval is greater than or equal to 0.4.

In some examples, the connector includes a one-way transmission assembly, the one-way transmission assembly connects two of the output mechanism, the first electric motor, and the second electric motor, the one-way transmission assembly allows the first electric motor and/or the second electric motor to drive the output mechanism, and the one-way transmission assembly prevents the output mechanism from driving the first electric motor or the second electric motor.

In some examples, the connector includes a clutch assembly, the clutch assembly includes a driving member formed on or connected to one of the first electric motor and the second electric motor and a driven member formed on or connected to the other of the first electric motor and the second electric motor, and the driving member is selectively connected to the driven member..

In some examples, the connector includes a clutch assembly, the clutch assembly includes a first clutch connected to one of the first electric motor and the second electric motor and a second clutch connected to the other of the first electric motor and the second electric motor, and the first clutch is selectively connected to the second clutch.

In some examples, the connector includes a differential assembly that allows the first electric motor and the second electric motor to simultaneously output power to the output mechanism at different rotational speeds.

In some examples, a transmission assembly for connecting the electric motor assembly to the output mechanism is further included.

In some examples, a controller is further included, which is configured to control the ratio of output torque of the first electric motor to output torque of the second electric motor according to a first set parameter.

In some examples, a detection mechanism is further included, which is configured to detect the first set parameter, where the first set parameter includes a load parameter of the output mechanism.

In a second aspect, an example of the present application provides an electric tool. The electric tool includes a housing; an output mechanism for driving a function element that implements a set function; and an electric motor assembly disposed at least partially in the housing and including a first electric motor for outputting first torque and a first rotational speed; a second electric motor for outputting second torque and a second rotational speed; and a connector selectively allowing power transmission between the first electric motor and the second electric motor. The output mechanism is connected to at least one of the first electric motor, the second electric motor, and the connector. When output torque of the first electric motor is greater than or equal to a first torque value and less than or equal to a fourth torque value, working efficiency of the first electric motor is greater than or equal to 70%. When output torque of the second electric motor is greater than or equal to a fifth torque value and less than or equal to an eighth torque value, working efficiency of the second electric motor is greater than or equal to 70%. The first torque value is less than the fifth torque value and the fourth torque value is less than the eighth torque value. When output torque of the electric motor assembly is greater than or equal to the first torque value and less than or equal to the eighth torque value, working efficiency of the electric motor assembly is greater than or equal to 70%.

In some examples, when the output torque of the first electric motor is greater than or equal to a second torque value and less than or equal to a third torque value, the working efficiency of the first electric motor is greater than or equal to 75%; when the output torque of the second electric motor is greater than or equal to a sixth torque value and less than or equal to a seventh torque value, the working efficiency of the first electric motor is greater than or equal to 75%; the second torque value is less than the sixth torque value and the third torque value is less than the seventh torque value; and when the output torque of the electric motor assembly is greater than or equal to the second torque value and less than or equal to the seventh torque value, the working efficiency of the electric motor assembly is greater than or equal to 75%.

In a third aspect, an example of the present application provides an electric tool. The electric tool includes a housing; an output mechanism for driving a function element that implements a set function; and an electric motor assembly disposed at least partially in the housing and including a first electric motor for outputting first torque and a first rotational speed; a second electric motor for outputting second torque and a second rotational speed; and a connector selectively allowing power transmission between the first electric motor and the second electric motor. The output mechanism is connected to at least one of the first electric motor, the second electric motor, and the connector. When working efficiency of the first electric motor is greater than or equal to 70%, output torque of the first electric motor is within a first output torque interval. When working efficiency of the second electric motor is greater than or equal to 70%, output torque of the second electric motor is within a second output torque interval. When working efficiency of the electric motor assembly is greater than or equal to 70%, output torque of the electric motor assembly is within a third output torque interval, where the third output torque interval covers at least the first output torque interval and the second output torque interval.

In a fourth aspect, an example of the present application provides an electric tool. The electric tool includes a housing; an output mechanism for driving a function element that implements a set function; a power supply mounting portion for mounting a direct current power supply; and an electric motor assembly disposed at least partially in the housing and including a first electric motor for outputting first torque and a first rotational speed and driving the output mechanism; and a second electric motor for outputting second torque and a second rotational speed and driving the output mechanism. The direct current power supply supplies power to the first electric motor and the second electric motor; and the nominal voltage of the electric tool is greater than or equal to 18 V.

In some examples, the first electric motor and the second electric motor are each a brushless motor.

In some examples, the direct current power supply includes a battery pack.

In some examples, the battery pack supplies power to various electric tools.

In some examples, the nominal voltage of the electric tool is greater than or equal to 18 V and less than or equal to 56 V.

In some examples, the nominal voltage of the electric tool is greater than 56 V and less than or equal to 120 V.

In some examples, the power supply mounting portion is disposed at least partially on the housing.

In a fifth aspect, an example of the present application provides an electric tool. The electric tool includes a housing; an output mechanism for driving a function element that implements a set function, where the output mechanism is disposed at least partially in the housing; a power supply mounting portion for mounting a direct current power supply; and an electric motor assembly used for driving the output mechanism and including a first electric motor for outputting first torque and a first rotational speed and a second electric motor for outputting second torque and a second rotational speed, where the first electric motor and the second electric motor are configured to have at least one different structural parameter.

In some examples, the first electric motor and the second electric motor have different outer diameters.

In some examples, the ratio of the outer diameter of the first electric motor to the outer diameter of the second electric motor is greater than or equal to 0.4.

In some examples, the first electric motor and the second electric motor have different stack lengths.

In some examples, the ratio of the stack length of the first electric motor to the stack length of the second electric motor is greater than or equal to 0.3.

In some examples, the structural parameter includes the outer diameter of a stator core, the inner diameter of the stator core, the outer diameter of a rotor core, the inner diameter of the rotor core, the thickness of a rotor pole, the thickness of a stator pole, the length of an air gap, the length of a core, the number of pairs of stator poles, an arc corresponding to the stator pole, the number of pairs of rotor poles, and an arc corresponding to the rotor pole.

In a sixth aspect, an example of the present application provides an electric tool. The electric tool includes a housing; an output mechanism for driving a function element that implements a set function; an electric motor assembly disposed at least partially in the housing and including a first electric motor for outputting first torque and a first rotational speed, a second electric motor for outputting second torque and a second rotational speed, and a connector selectively allowing power transmission between the first electric motor and the second electric motor, where the output mechanism is connected to at least one of the first electric motor, the second electric motor, and the connector; a power supply for supplying power to the first electric motor and the second electric motor; and a controller for controlling the electric motor assembly. The controller is configured to determine, according to a load parameter of the output mechanism and a load distribution coefficient of the electric motor assembly, at least one of an output parameter value of the first electric motor and an output parameter value of the second electric motor or the ratio of an output parameter of the first electric motor to an output parameter of the second electric motor.

In some examples, a detection assembly is further included, which is configured to detect the load parameter of the output mechanism.

In some examples, a required parameter of the electric motor assembly is determined according to the load parameter of the output mechanism, where the required parameter includes at least one of required torque, a required rotational speed, and required power.

In some examples, the output parameter includes at least one of output torque, an output rotational speed, and output power.

In some examples, the load distribution coefficient enables total efficiency of the electric motor assembly to be greater than or equal to efficiency of the first electric motor or the second electric motor in response to the same load of the output mechanism.

In some examples, the load distribution coefficient enables the ratio of an efficiency interval of the electric motor assembly greater than or equal to 70% to a total efficiency interval of the electric motor assembly to be greater than or equal to 0.5.

In some examples, the controller is configured to, when both the first electric motor and the second electric motor are started, control one of the first electric motor and the second electric motor through a first parameter set and control the other of the first electric motor and the second electric motor through a second parameter set, where the first parameter set and the second parameter set have at least one different parameter.

In some examples, the controller is configured to, when determining that both the first electric motor and the second electric motor are started and a required parameter of the electric motor assembly is less than a second preset value, switch the electric motor assembly to startup of the first electric motor or the second electric motor.

In some examples, the controller is configured to, when determining that the first electric motor or the second electric motor in the electric motor assembly is started and a required parameter of the electric motor assembly is greater than a first preset value, switch the electric motor assembly to startup of both the first electric motor and the second electric motor.

In a seventh aspect, an example of the present application provides an electric tool. The electric tool includes a housing; an output mechanism for driving a function element that implements a set function; an electric motor assembly disposed at least partially in the housing and including a first electric motor for outputting first torque and a first rotational speed, a second electric motor for outputting second torque and a second rotational speed, and a connector selectively allowing power transmission between the first electric motor and the second electric motor, where the output mechanism is connected to at least one of the first electric motor, the second electric motor, and the connector; a power supply for supplying power to the first electric motor and the second electric motor; and a controller for controlling the electric motor assembly. The controller is configured to configure an output parameter of the first electric motor and an output parameter of the second electric motor according to a load parameter of the output mechanism such that the ratio of an efficiency interval of the electric motor assembly greater than or equal to 70% to a total efficiency interval of the electric motor assembly is greater than or equal to 0.5.

In an eighth aspect, an example of the present application provides an electric tool. The electric tool includes a housing; an output mechanism for driving a function element that implements a set function; an electric motor disposed at least partially in the housing and including a rotor assembly formed with or connected to a rotor shaft rotating around a first axis and a stator assembly disposed coaxially with the rotor assembly and including a first stator and a second stator; and a controller electrically connected to the first stator and the second stator and used for controlling the electric motor. The controller is configured to make the first stator energized and the second stator de-energized so that the electric motor is in a first working state; make the first stator de-energized and the second stator energized so that the electric motor is in a second working state; and make the first stator energized and the second stator energized so that the electric motor is in a third working state. Limit values of efficiency of the electric motor in all working states constitute a total efficiency interval, and efficiency values of the electric motor greater than or equal to 70% constitute a first efficiency interval, where the ratio of the first efficiency interval to the total efficiency interval is greater than or equal to 0.5.

In some examples, the stator assembly is disposed with the first axis as a central axis.

In some examples, the first stator and the second stator are coaxially sleeved.

In some examples, the first stator and the second stator are coaxially arranged along a direction of the first axis.

In some examples, the first stator and the second stator are spaced apart along a direction of the first axis.

In some examples, output torque of the electric motor in the third working state is greater than output torque of the electric motor in the first working state, and the output torque of the electric motor in the third working state is greater than output torque of the electric motor in the second working state.

In some examples, the rotor assembly includes a first rotor and a second rotor, the first rotor mates with the first stator, the second rotor mates with the second stator, and the second rotor is formed with or connected to the first rotor.

An electric tool includes a housing; an output mechanism for driving a function element that implements a set function; and an electric motor disposed at least partially in the housing and including a rotor assembly and a stator assembly including a first stator and a second stator. The first stator and the second stator are arranged along an axial direction.

In some examples, the rotor assembly is formed with or connected to a rotor shaft rotating around a first axis; and the stator assembly and the rotor assembly are each arranged with the first axis as a central axis.

In some examples, the electric motor further includes a controller electrically connected to the first stator and the second stator and used for controlling the electric motor, where the controller is configured to make the first stator energized and the second stator de-energized so that the electric motor is in a first working state; make the first stator de-energized and the second stator energized so that the electric motor is in a second working state; and make the first stator energized and the second stator energized so that the electric motor is in a third working state.

In a ninth aspect, an example of the present application provides an electric tool. The electric tool includes a housing; an output mechanism for driving a function element that implements a set function; a power supply mounting portion disposed at least partially on the housing and used for mounting a direct current power supply; and an electric motor disposed at least partially in the housing. The electric motor includes a rotor rotating around a first axis; and a stator including a ring yoke portion and multiple tooth portions formed on or connected to the ring yoke portion; first windings wound around the multiple tooth portions and configured to generate a first magnetic field; and second windings wound around the multiple tooth portions and configured to generate a second magnetic field. The power supply selectively supplies power to the first windings and the second windings. A first winding and a second winding are arranged along a radial direction of the first axis.

In some examples, the direct current power supply includes at least one battery pack.

In some examples, the nominal voltage of the electric tool is greater than or equal to 18 V.

In some examples, the nominal voltage of the electric tool is greater than or equal to 36 V and less than or equal to 56 V.

In some examples, the nominal voltage of the electric tool is greater than 56 V and less than or equal to 120 V.

In some examples, the electric motor further includes a controller electrically connected to the first windings and the second windings and controlling energized states of the first windings and the second windings. The controller is configured to make the first windings energized and the second windings de-energized so that the electric motor is in a first working state; make the first windings de-energized and the second windings energized so that the electric motor is in a second working state; and make the first windings energized and the second windings energized so that the electric motor is in a third working state.

In some examples, the electric motor further includes a detection assembly for detecting energized and de-energized states of the first windings and the second windings.

In some examples, the number of turns of the first winding is different from the number of turns of the second winding.

In some examples, the wire diameter of the first winding is different from the wire diameter of the second winding.

In some examples, the multiple tooth portions protrude from the inner side of the ring yoke portion.

### BRIEF DESCRIPTION OF DRAWINGS

FIG. 1 is a structural view of an example of the present application.
FIG. 2 is a view showing examples of electric tools to which an electric motor assembly of the present application is applicable.
FIG. 3 is a schematic view showing the structure of a first electric motor which is an outrunner according to an example of the present application.
FIG. 4 is an exploded view showing the structure of an electric motor assembly according to an example of the present application.
FIG. 5 is a sectional view of an electric motor assembly according to an example of the present application.
FIG. 6 is a sectional view of an electric motor assembly provided with a motor shield according to an example of the present application.
FIG. 7 is a schematic view showing the structure of a first electric motor which is an inrunner according to an example of the present application.
FIG. 8 is a structural view of a second electric motor assembly according to an example of the present application.
FIG. 9 is a structural view of a third electric motor assembly according to an example of the present application.
FIG. 10 is a sectional view showing the structure of a third electric motor assembly according to an example of the present application.
FIG. 11 is a sectional view showing the structure of a fourth electric motor assembly according to an example of the present application.
FIG. 12 is a circuit schematic of an example of the present application.

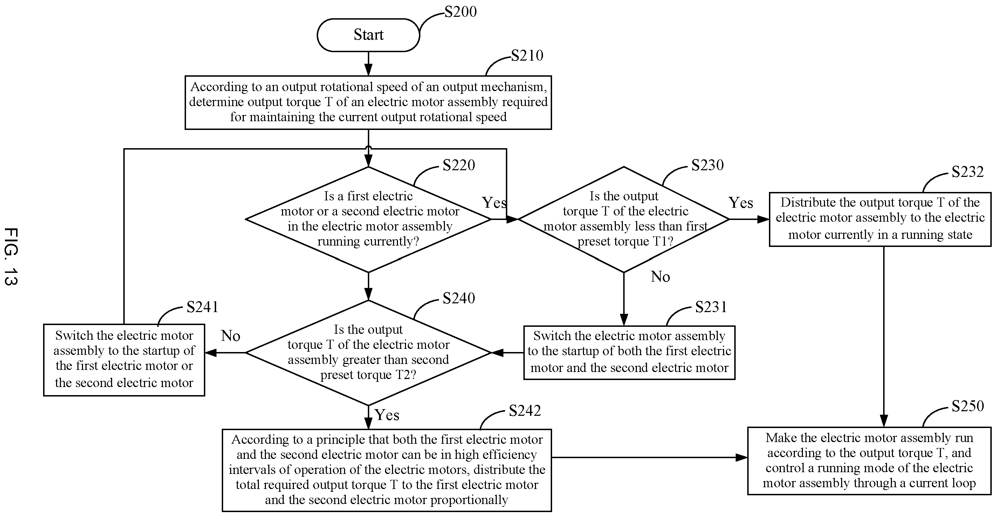

FIG. 13 is a flowchart of a control method of the present application.
FIG. 14 is a graph showing motor efficiency and motor output torque of a first electric motor, a second electric motor, and an electric motor assembly of the present application.
FIG. 15 is a graph showing motor efficiency and motor output torque of an electric motor assembly of the present application.
FIG. 16 is a structural view of an electric motor according to a second example of the present application.
FIG. 17 is a cross-sectional view showing the structure of an electric motor which is an inrunner according to a second example of the present application.
FIGS. 18A and 18B are sectional views of FIG. 16, which mainly show different structures of a rotor assembly.
FIG. 19 is a circuit schematic of an example of the present application.
FIG. 20 is a structural view of an electric motor according to a third example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

To clearly illustrate the technical solutions of the present application, an upper side and a lower side are defined in the drawings of the specification.

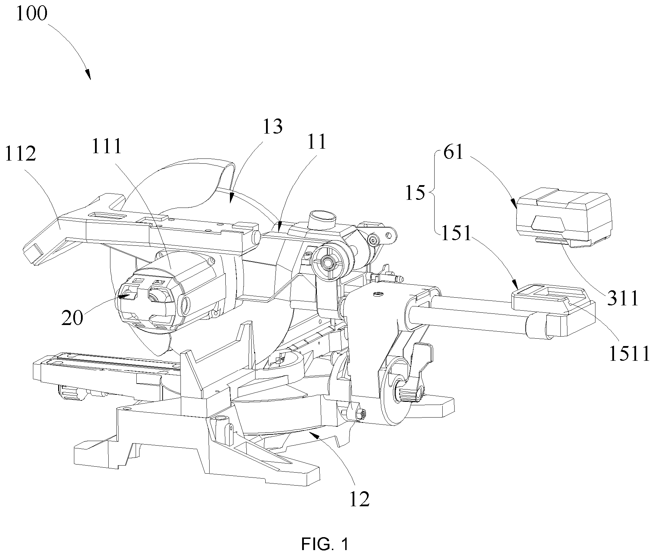

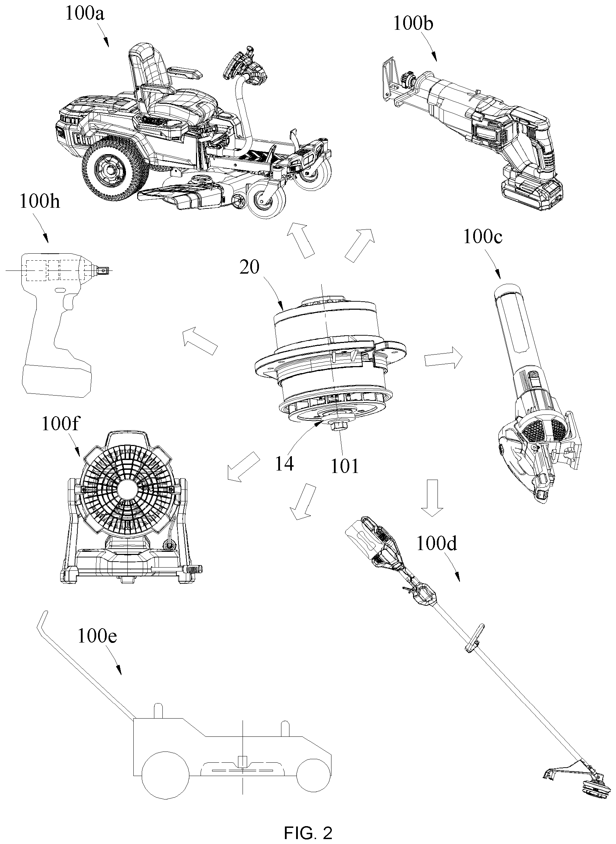

FIG. 1 shows an electric tool in an example of the present application. The electric tool includes an electric motor assembly 20. In this example, the electric tool is a miter saw 100. As shown in FIG. 2, in some examples, the electric tool may be a garden tool, for example, a string trimmer 100d, a blower 110c, a walk-behind electric tool such as a mower 100e, a chainsaw, or a washer. Alternatively, the electric tool may be a decoration tool, for example, a screwdriver/drill/wrench 100h, an electric hammer, a nail gun, or a sander. Alternatively, the electric tool may be a sawing tool, for example, a reciprocating saw 100b, a jigsaw, or a circular saw. Alternatively, the electric tool may be a table tool, for example, a table saw, a metal cutter, or a router. Alternatively, the electric tool may be a sanding tool, for example, an angle grinder or a sander. Alternatively, the electric tool may be another electric tool, for example, a fan 100f. Alternatively, the electric tool may be walking equipment 100a that does not travel on roads, for example, a utility vehicle, a dune buggy, a utility terrain vehicle (UTV), a golf cart, an all-terrain vehicle (ATV), or an agricultural machinery vehicle such as a reaper or a sprayer. Alternatively, the walking equipment may be a cleaning machine. Alternatively, the electric tool may be a smart walking electric tool that is driven by an electric motor or an electric motor assembly to travel and implement a work function, for example, a smart mower.

Any electric tool driven by an electric motor can adopt the technical solutions disclosed in this example. Any power device adopting the technical solutions disclosed in this example falls within the scope of the present application. For example, the electric tool may be a powerhead, and the powerhead includes the electric motor assembly. The powerhead is configured to be adapted to some output assemblies to implement functions of the tool.

As shown in FIG. 1, the miter saw 100 is used as an example. The miter saw 100 includes a power supply 61. In this example, the power supply 61 is a direct current power supply. The direct current power supply is configured to provide electrical energy for the miter saw 100. The direct current power supply is a battery pack, and the battery pack supplies power to the miter saw 100 in collaboration with a corresponding power supply circuit. It is to be understood by those skilled in the art that the power supply is not limited to the direct current power supply, and the corresponding components in the machine may be powered through mains power or an alternating current power supply in conjunction with corresponding rectifier, filter, and voltage regulator circuits. In the subsequent description, the battery pack 61 is used instead of the power supply 61, which cannot be construed as limiting the present application.

The miter saw 100 further includes a base 12, a housing 11, a function element 13, and an output mechanism 14. The housing 11 includes a body housing 111 and a grip 112. At least the electric motor assembly 20 and part of the output mechanism 14 are accommodated in the body housing 111. The body housing 111 is formed with or connected to the grip 112 for a user to operate.

The base 12 enables the miter saw 100 to be placed smoothly on the ground or an operation plane.

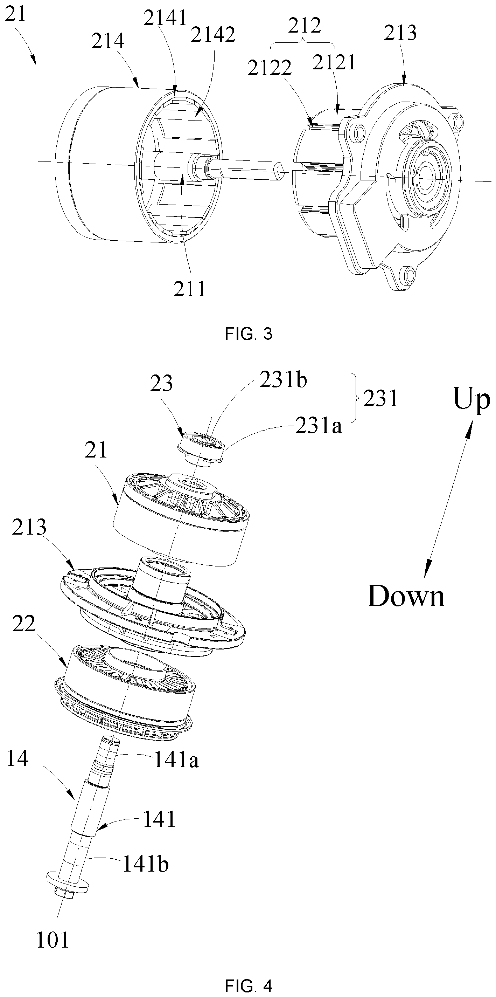

As shown in FIG. 4, the output mechanism 14 is configured to drive the function element 13. In this example, the output mechanism 14 includes an output shaft 141. In some examples, a transmission assembly is connected between the output mechanism 14 and the electric motor assembly 20, for example, in high-speed and high-torque output tools such as screwdrivers, drills, and saws. The transmission assembly transmits output power of the electric motor assembly 20 to the output mechanism 14, and the output mechanism 14 drives the function element 13 to machine a workpiece. In some examples, the electric motor assembly 20 directly drives the output mechanism 14, for example, in the fan, the blower, and mowing tools, and the output mechanism 14 drives the function element 13 to machine the workpiece.

The function element 13 is configured to implement a set function. In this example, the function element 13 is configured to implement the work function of the electric tool, such as a saw blade for cutting the workpiece. In other alternative examples, the function element 13 may be a grinding disc, a blade, a screwdriver, a fan, a pump, or a walking wheel.

The overall structure of the miter saw 100 is generally the same as that of a common miter saw and is not described in detail here.

In this example, the electric motor assembly 20 is configured to provide a power source for the output mechanism 14 so that the output mechanism 14 drives the function element 13. In this example, the electric motor assembly 20 includes a first electric motor 21 and a second electric motor 22. Each of the first electric motor 21 and the second electric motor 22 includes a stator and a rotor. With the first electric motor 21 as an example, as shown in FIG. 3, a stator 212 includes a stator core 2121 and stator windings 2122. A rotor 214 includes a rotor core 2141 and permanent magnets 2142. A rotor shaft 211 is formed on or connected to the rotor 214 and used for outputting power. For an outrunner, the rotor is sleeved on the outer side of the stator. For an inrunner, the stator is sleeved on the outer side of the rotor. In this example, the first electric motor 21 is the outrunner. The first electric motor 21 further includes a stator support 213 provided with mounting holes. The stator 212 is fixed outside the stator support 213.

The overall structure of the electric motor here is generally the same as that of a common brushless motor and is not described in detail here.

As shown in FIG. 1, a power supply device 15 includes a power supply mounting portion 151 and the battery pack 61. The power supply mounting portion 151 is disposed at least partially on the housing 11. The power supply mounting portion 151 is different in position for different types of electric tools. The position of the power supply mounting portion 151 does not affect the substantive content protected in the present application.

The battery pack 61 is connected to the power supply mounting portion 151 or placed at least partially in the power supply mounting portion 151. It is to be understood that the power supply mounting portion 151 is used for receiving the battery pack 61. In this example, the battery pack 61 supplies power to the first electric motor 21 and the second electric motor 22, and the nominal voltage of the electric tool is greater than or equal to 18 V. The battery pack 61 supplies power to the first electric motor 21 and the second electric motor 22 in collaboration with the corresponding power supply circuit. The battery pack 61 includes an insertion structure 311 and a terminal interface (not shown in the figure). The power supply mounting portion 151 includes a coupling portion 1511 electrically connected to the battery pack 61, and the coupling portion 1511 is provided with tool terminals (not shown in the figure). Tool terminals (not shown in the figure) with the same structure are provided on different electric tools to be adapted to the terminal interface (not shown in the figure) on the battery pack 61 so that the battery pack 61 can supply power to various different electric tools. The power supply circuit in collaboration with the battery pack is adjusted according to control requirements of different electric tools. In some examples, the nominal voltage of the electric tool is greater than or equal to 36 V and less than or equal to 56 V. In some examples, the nominal voltage of the electric tool is greater than 56 V and less than or equal to 120 V. In some examples, the battery pack 21 may be a lithium battery pack, a solid-state battery pack, or a pouch battery pack. The nominal voltage of the battery pack is 18 V, 24 V, 36 V, 48 V, 56 V, 80 V, or 120 V.

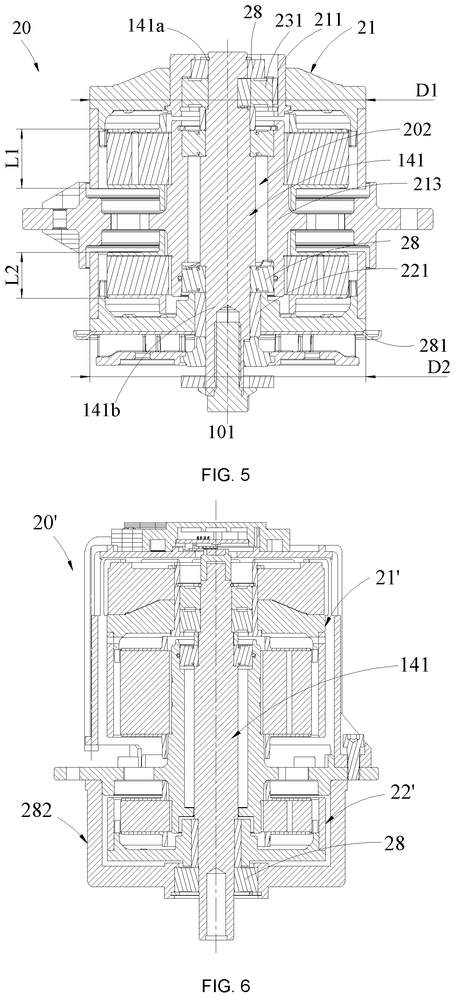

As shown in FIGS. 4 and 5, the first electric motor 21 is configured to output first torque and a first rotational speed. The second electric motor 22 is configured to output second torque and a second rotational speed. The electric motor assembly 20 further includes a connector 23. The connector 23 selectively allows power transmission between the first electric motor 21 and the second electric motor 22. In some examples, the connector 23 is connected to the first electric motor 21 and the second electric motor 22, and the connector 23 switches a connection state between the first electric motor 21 and the second electric motor 22 to switch the power transmission between the first electric motor 21 and the second electric motor 22 so that the electric motor assembly 20 switches between multiple working states. The output mechanism 14 is connected to the electric motor assembly 20. That is to say, the output mechanism 14 is connected to at least one of the first electric motor 21, the second electric motor 22, and the connector 23 so that the first electric motor 21 and the second electric motor 22 can be coupled to drive the output mechanism 14. The connector 23 transmits power from at least one of the first electric motor and the second electric motor to the output mechanism 14, and the connector 23 switches the power transmission between the first electric motor 21, the second electric motor 22, and the output shaft 141 so that the electric motor assembly 20 switches between the multiple working states.

According to a load situation of the output mechanism 14, the first electric motor 21, the second electric motor 22, or both the first electric motor 21 and the second electric motor 22 are selected to drive the output mechanism 14 so that no matter whether the electric tool is in a light load state, a medium load state, or a heavy load state, appropriate input power can be allocated. The working efficiency under all conditions can be improved. The load state of the electric tool may be characterized by a load state of the output shaft. The load state of the output shaft may be characterized by a parameter related to a current of the electric motor and a parameter related to output torque of the electric motor. For example, when a real-time current of the electric motor is not higher than 10% of the rated current or is 10% to 15% of the rated current, it is the light load state, and when the real-time current of the electric motor is 50% to 80% of the rated current, it is the heavy load state. Specific values may be set according to actual situations and are not specifically limited here.

The first electric motor 21 is configured to output the first torque and the first rotational speed. The second electric motor 22 is configured to output the second torque and the second rotational speed. The first torque is different from the second torque. The first rotational speed is different from the second rotational speed. It is to be interpreted that the first torque being different from the second torque is defined in some examples as different maximum output torque of the first electric motor and the second electric motor, and the first electric motor and the second electric motor may output the same torque at a moment or in a time period in the entire working process. In some examples, it is defined as different output torque ranges of the first electric motor and the second electric motor in high efficiency intervals, and the first electric motor and the second electric motor may output the same torque at a moment or in a time period in the entire working process. The first rotational speed being different from the second rotational speed is defined in some examples as different maximum output rotational speeds of the first electric motor and the second electric motor, and the first electric motor and the second electric motor may output the same rotational speed at a moment or in a time period in the entire working process. In some examples, it is defined as different output rotational speed ranges of the first electric motor and the second electric motor in high efficiency intervals, and the first electric motor and the second electric motor may output the same rotational speed at a moment or in a time period in the entire working process.

In some examples, an application situation of the first electric motor and the second electric motor is listed as an example, where the first electric motor 21 has low output torque. The second electric motor 22 has high output torque. Alternatively, the first electric motor 21 may have high output torque. The second electric motor 22 may have low output torque. Alternatively, the first electric motor 21 and the second electric motor 22 are of the same type, but the first electric motor 21 and the second electric motor 22 have different output rotational speeds and different output torque. In this example, the first electric motor 21 and the second electric motor 22 are each a direct current brushless motor.

In an example, the first electric motor 21 and the second electric motor 22 further include at least one different structural parameter. The structural parameter includes the outer diameter D of the electric motor and the stack length L of the electric motor. It is to be interpreted that the "outer diameter of the electric motor" refers to the outer diameter of the entire electric motor. The "stack length of the electric motor" refers to the length of the stator core.

In this example, the ratio of the stack length L2 of the second electric motor 22 to the stack length L1 of the first electric motor 21 is greater than or equal to 0.3. The ratio of the stack length L2 of the second electric motor 22 to the stack length L1 of the first electric motor 21 is greater than or equal to 0.4, 0.5, 0.6, 0.7, 0.8, or 0.9. In other alternative examples, the ratio of the stack length L1 of the first electric motor 21 to the stack length L2 of the second electric motor 22 is greater than or equal to 0.3. In other alternative examples, the ratio of the stack length L1 of the first electric motor 21 to the stack length L2 of the second electric motor 22 is greater than or equal to 0.4, 0.5, 0.6, 0.7, 0.8, or 0.9.

In other alternative examples, the ratio of the outer diameter D1 of the first electric motor 21 to the outer diameter D2 of the second electric motor 22 is greater than or equal to 0.4. In other alternative examples, the ratio of the outer diameter D1 of the first electric motor 21 to the outer diameter D2 of the second electric motor 22 is greater than or equal to 0.5, 0.6, 0.7, 0.8, or 0.9.

The structural parameter of the first electric motor 21 and the second electric motor 22 includes the outer diameter of the stator core, the inner diameter of the stator core, the outer diameter of the rotor core, the inner diameter of the rotor core, the thickness of a rotor pole, the thickness of a stator pole, the length of an air gap, the length of the core, the number of pairs of stator poles, an arc corresponding to the stator pole, the number of pairs of rotor poles, and an arc corresponding to the rotor pole. The first electric motor 21 and the second electric motor 22 are different in at least one structural parameter.

The output mechanism 14 includes an input end and an output end. The output end is connected to the function element 13, and the input end is connected to at least one of the first electric motor 21, the second electric motor 22, and the connector 23. In this example, the output mechanism 14 includes the output shaft 141. An output end 141b of the output shaft is the output end of the output mechanism 14, and an input shaft 141a of the output shaft is the input end of the output mechanism 14.

In this example, the first electric motor 21 and the second electric motor 22 are each the outrunner. A first rotor shaft 211 of the first electric motor 21, a second rotor shaft 221 of the second electric motor 22, and the output shaft 141 rotate around a first axis 101. The first rotor shaft 211 and the second rotor shaft 221 are hollow structures, and the stator 212 of the first electric motor and a stator of the second electric motor share the same stator support 213. In some examples, the stator 212 of the first electric motor and the stator of the second electric motor are each connected to the stator support 213, and the stator support of the first electric motor is connected to the stator support of the second electric motor. In some examples, the stator 212 of the first electric motor and the stator of the second electric motor are coaxially connected through the stator support. The first rotor shaft 211, the stator support 213, and the second rotor shaft 221 form a first accommodation space 202. The output shaft 141 is disposed in the first accommodation space 202. In this example, the connector 23 includes a one-way transmission assembly. Optionally, the connector 23 includes a one-way bearing 231. The one-way bearing 231 is disposed at the input end 141a. The first electric motor 21 is disposed closer to the input end 141a, and the second electric motor 22 is disposed closer to the output end 141b than the first electric motor 21. The one-way bearing 231 is disposed in the first rotor shaft 211. In this example, the first electric motor 21 is disposed above the second electric motor 22. In other alternative examples, the first electric motor 21 is disposed below the second electric motor 22. The position of the first electric motor 21 relative to the second electric motor 22 does not affect the substantive content protected in the present application. Optionally, the one-way bearing 231 connects the output mechanism 14 to the first electric motor 21 or connects the output mechanism 14 to the second electric motor 22. Optionally, the one-way bearing 231 connects the first electric motor 21 to the second electric motor 22. The one-way bearing 231 allows the first electric motor 21, the second electric motor 22, or both the first electric motor and the second electric motor to drive the output mechanism 14, and the one-way bearing 231 prevents the output mechanism 14 from driving the first electric motor 21 or the second electric motor 22.

The one-way bearing 231 includes a one-way bearing outer race 231a and a one-way bearing inner race 231b. Optionally, the one-way bearing outer race 231a is connected to the first rotor shaft 211, and the one-way bearing inner race 231b is connected to the output shaft 141. The one-way bearing 231 prevents the output shaft 141 from driving the first rotor shaft 211 to rotate.

In this example, the electric motor assembly 20 includes at least a first working state corresponding to the light load state (when required output torque of the electric motor is low) and a second working state corresponding to the heavy load state (when the required output torque of the electric motor is high). When the electric motor assembly 20 is controlled to enter the first working state, the second electric motor 22 is controlled to start working to drive the output shaft 141 to output power, and the second rotor shaft 221 and the output shaft 141 rotate along a set direction. The first electric motor 21 receives no startup signal or is controlled not to start working. Since the output shaft 141 is connected to the first rotor shaft 211, if the output shaft 141 rotates to drive the first rotor shaft 211 to rotate, the rotor of the first electric motor 21 is passively rotated in a reverse direction, easily causing damage to the electric motor. In this example, the one-way bearing 231 is disposed. When the second electric motor 22 is started and the first electric motor 21 is not started, the rotation of the output shaft 141 drives the one-way bearing inner race 231b to rotate, the one-way bearing outer race 231a rotates relative to the one-way bearing inner race 231b, and the one-way bearing outer race 231a does not rotate with the output shaft 141. The damage to the first electric motor 21 is avoided.

It is to be understood that when a power output portion of the one-way bearing (the inner race in this example) rotates faster than a power source (the outer race in this example), a one-way clutch is in a disengaged state, and the inner race and the outer race are not linked, which is a one-way overrunning function of the one-way clutch.

When the electric motor assembly 20 is controlled to enter the second working state, the second electric motor 22 is controlled to start and the first electric motor 21 is also controlled to start, and the first rotor shaft 211 and the second rotor shaft 221 are required to simultaneously drive the output shaft 141 to rotate. When the rotational speed of the first rotor shaft 211 is equal to or higher than that of the second rotor shaft 221, the relative movement between the one-way bearing inner race 231b and the one-way bearing outer race 231a is locked, and the second electric motor 22 and the first electric motor 21 drive the output shaft 141 to move. Thus, the electric motor assembly 20 is provided with different working states.

In other alternative examples, the first rotor shaft is connected to the second rotor shaft through the one-way bearing, and the output shaft is connected to the second rotor shaft. When the electric motor assembly is controlled to enter the first working state, the first electric motor is controlled to start working to drive the output shaft to output power, and the one-way bearing prevents the first electric motor from driving the second rotor shaft to move. When the electric motor assembly is controlled to enter the second working state, the first electric motor is controlled to start and the second electric motor is also controlled to start. The relative movement between the one-way bearing inner race and the one-way bearing outer race is locked. The first rotor shaft and the second rotor shaft simultaneously drive the output shaft to rotate.

As shown in FIG. 5, an ordinary bearing 28 is sleeved as needed to support the first rotor shaft 211, the second rotor shaft 221, and the output shaft 141. In this example, the ordinary bearing 28 is disposed in the first accommodation space 202, and a dustproof cover 281 is configured to block an opening of the first accommodation space closer to the output end so that dust can be prevented from entering the ordinary bearing 28. In some examples, as shown in FIG. 6, a motor shield 282 is provided on the outer side of an electric motor assembly 20' or a first electric motor 21' or a second electric motor 22', an ordinary bearing 28 is provided on the outer side of the first electric motor 21' or the second electric motor 22', and the ordinary bearing 28 supports the output shaft 141 and the motor shield 282.

When a load of the output mechanism 14 is relatively light, the electric motor assembly 20 is in the first working state, and only the electric motor with low output torque, such as the second electric motor 22, is started so that the second electric motor 22 can work within a power interval where the electric motor has relatively high efficiency. The energy of the battery pack 61 can be saved and the working time of the battery pack 61 can be increased. The following problem is solved: a power consumption increases due to the startup of the first electric motor 21 and the second electric motor 22, and the working duration of the battery pack 61 is reduced. Since the power of the second electric motor 22 only needs to satisfy the light load of the output mechanism 14, output power of the second electric motor 22 may be configured to be relatively small. That is to say, the second electric motor 22 with small power can be used so that the cost can be reduced. When the load of the output mechanism 14 is relatively heavy, the electric motor assembly 20 is in the second working state, and both the first electric motor 21 and the second electric motor 22 are started so that the first electric motor 21 and the second electric motor 22 can work within power intervals where the electric motors have relatively high efficiency. The working efficiency and high efficiency interval of the electric motor assembly 20 are improved.

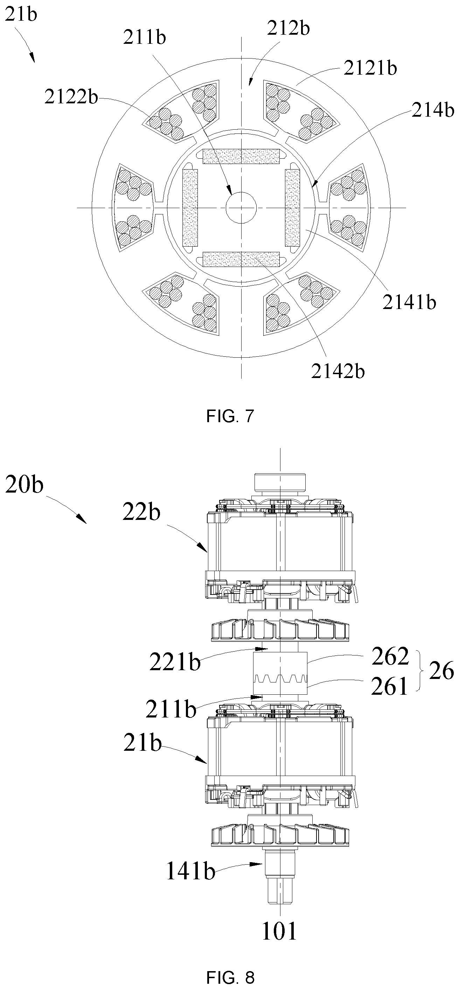

As shown in FIG. 7, in some alternative examples, a first electric motor 21b and a second electric motor 22b are each the inrunner. With the first electric motor 21b as an example, the first electric motor 21b includes a stator 212b and a rotor 214b. The stator 212b includes a stator core 2121b and coil windings 2122b on the stator core. The rotor 214b includes a rotor core 2141b and permanent magnets 2142b on the rotor core, where the permanent magnets 2142b are arranged at intervals along a circumferential direction of the rotor core 2141b and configured to generate a magnetic field. A rotor shaft 211b is formed on or connected to the rotor 214b and used for outputting power. The coil windings 2122b are windings of conductive metal, such as copper windings.

As shown in FIG. 8, a first rotor shaft 211b of the first electric motor 21b, a second rotor shaft 221b of the second electric motor 22b, and an output shaft 141b rotate around the first axis 101. The first rotor shaft 211b is connected to the second rotor shaft 221b by a clutch assembly 26. The clutch assembly 26 includes a driving member 261 and a driven member 262, and the clutch assembly 26 has a first state and a second state. When the clutch assembly 26 is in the first state, the driving member 261 is disconnected from the driven member 262. Thus, the power transmission between the first rotor shaft 211b and the second rotor shaft 221b is disconnected. When the clutch assembly 26 is in the second state, the driving member 261 is engaged with the driven member 262, and power is transmitted between the first rotor shaft 211 and the second rotor shaft 221.

The output shaft 141b is mounted to the first rotor shaft 211b. When an electric motor assembly 20b is in the first working state, the first electric motor 21b is controlled to start and the second electric motor 22b receives no startup signal or is controlled not to start working. At the same time, the clutch assembly 26 is switched to the first state. In this case, only the first electric motor 21b drives the output shaft 141b to output power. When the electric motor assembly 20b is in the second working state, the second electric motor 22b is controlled to start and the first electric motor 21b is also controlled to start. At the same time, the clutch assembly is switched to the second state. In this case, the first electric motor 21b directly drives the output shaft 141b to output power, and the second electric motor 22b drives the first electric motor 21b to drive the output shaft 141b to output power.

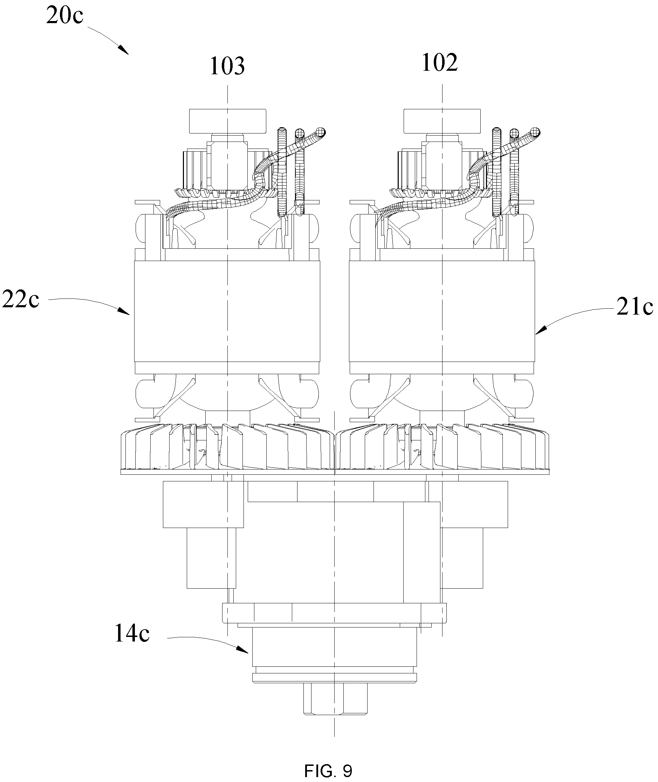

As shown in FIGS. 9 to 11, in some alternative examples, the output shaft rotates around the first axis 101, the first rotor shaft of the first electric motor rotates around a second axis 102, and the second rotor shaft of the second electric motor rotates around a third axis 103. In this example, the first axis 101 is parallel to but does not coincide with the second axis 102 and the third axis 103. In other examples, the first axis 101 may be parallel to or coincide with the second axis 102 and the third axis 103.

The clutch assembly includes a first clutch 232 and a second clutch 233. The first clutch 232 is disposed between a first electric motor 21c and an output mechanism 14c, and the first clutch 232 is configured to transmit power between the first electric motor 21c and the output mechanism 14c. The second clutch 233 is disposed between a second electric motor 22c and the output mechanism 14c, and the second clutch 233 is configured to transmit power between the second electric motor 22c and the output mechanism 14c.

In this example, an electric motor assembly 20c further includes a transmission member 24, and the transmission member 24 is drivingly connected to a first rotor shaft 211c and a second rotor shaft 221c. The transmission member 24 is connected to an output shaft 141c, where the transmission member 24 does not move relative to the output shaft 141c. In this example, the first clutch 232 is disposed between the transmission member 24 and the first rotor shaft 211c. The first clutch 232 is a one-way transmission assembly. In this example, the first clutch 232 is a one-way bearing. The second clutch 233 is disposed between the transmission member 24 and the second rotor shaft 221c. The second clutch 233 is a one-way transmission assembly. In this example, the second clutch 233 is a one-way bearing. When the electric motor assembly 20c is controlled to enter the first working state, the first electric motor 21c is controlled to start working to drive, through the transmission member 24, the output shaft 141c to output power, and the one-way bearing 231 prevents the transmission member 24 from driving the second rotor shaft 221c to move. When the electric motor assembly 20c is controlled to enter the first working state, the second electric motor 22c is controlled to start and the first electric motor 21c is also controlled to start. The relative movement between the one-way bearing inner race and the one-way bearing outer race is locked. The first rotor shaft 211c and the second rotor shaft 221c simultaneously drive the output shaft 141c to rotate. In this example, the electric motor assembly 20c may further include a third working state, that is, the second electric motor 22c is controlled to start working to drive, through the transmission member 24, the output shaft 141c to output power, and the one-way bearing 231 prevents the transmission member 24 from driving the first rotor shaft 211c to move. In this case, only the second electric motor 22c drives the output shaft 141c.

In some alternative examples, at least one of the first electric motor and the second electric motor is an alternating current electric motor, and the clutch assembly includes the first clutch and the second clutch.

In some alternative examples, the clutch assembly includes one of the first clutch 232 and the second clutch 233. In some alternative examples, at least one of the first electric motor and the second electric motor is an alternating current electric motor, and the first electric motor is rigidly connected to the second electric motor. In some alternative examples, the first electric motor and the second electric motor are each a direct current electric motor, and the first electric motor is rigidly connected to the second electric motor.

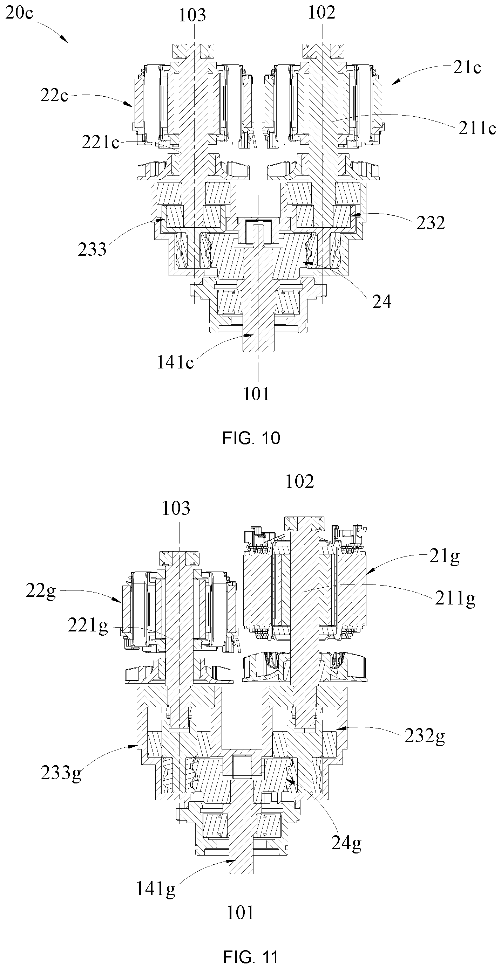

As shown in FIG. 11, in some alternative examples, a first clutch 232g includes a first driving member and a first driven member, and a second clutch 233g includes a second driving member and a second driven member. The first clutch 232g has a first state and a second state. When the first clutch 232g is in the first state, the first driving member is disconnected from the first driven member. Thus, the power transmission between a first rotor shaft 211g and a transmission member 24g is disconnected. When the first clutch 232g is in the second state, the first driving member is engaged with the first driven member, and power is transmitted between the first rotor shaft 211g and the transmission member 24g. The second clutch 233g has a third state and a fourth state. When the second clutch 233g is in the third state, the second driving member is disconnected from the second driven member. Thus, the power transmission between a second rotor shaft 221g and the transmission member 24g is disconnected. When the second clutch 233g is in the fourth state, the second driving member is engaged with the second driven member, and power is transmitted between the second rotor shaft 221g and the transmission member 24g.

In some alternative examples, the connector includes a differential assembly that allows the first electric motor and the second electric motor to simultaneously output power to the output mechanism at different rotational speeds.

Part of the structures of the connector in the preceding examples may be used alone, or a combination of several technical solutions may be used.

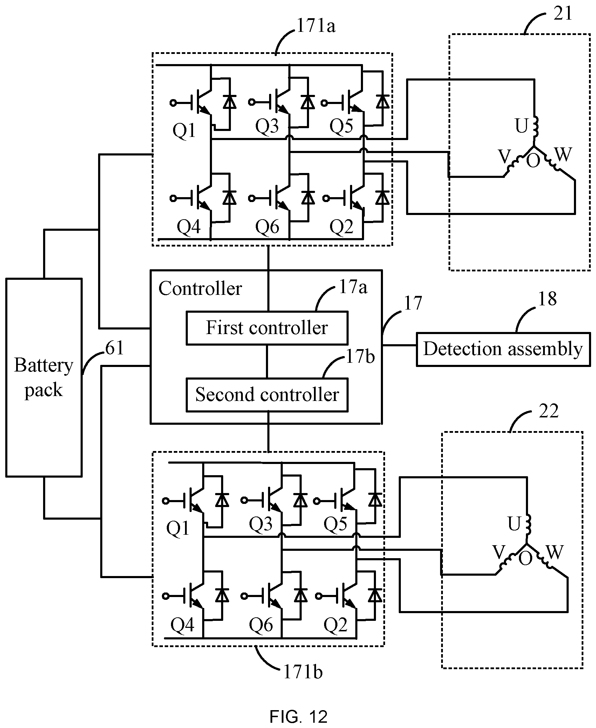

As shown in FIG. 12, the electric tool further includes a controller 17 for controlling the electric motor assembly 20. The controller 17 is disposed on a control circuit board including a printed circuit board (PCB) and a flexible printed circuit (FPC) board. The controller 17 adopts a dedicated control chip, such as a single-chip microcomputer or a microcontroller unit (MCU). It is to be noted that the control chip may be integrated into the controller 17 or may be disposed independently of the controller 17. A structural relationship between a driver chip and the controller 17 is not limited in this example.

The controller 17 is configured to determine, according to a load parameter of the output mechanism and a load distribution coefficient of the electric motor assembly, an output parameter value of the first electric motor 21 and an output parameter value of the second electric motor 22 or the ratio of an output parameter of the first electric motor 21 to an output parameter of the second electric motor 22. The load distribution coefficient enables the total efficiency of the electric motor assembly 20 to be greater than or equal to the efficiency of the first electric motor 21 or the second electric motor 22 that works alone in response to the same load of the output mechanism. The distribution coefficient enables the ratio of an efficiency interval of the electric motor assembly 20 greater than or equal to 70% to a total efficiency interval of the electric motor assembly 20 to be greater than or equal to 0.5. In this example, the load distribution coefficient ensures optimal efficiency distribution between the first electric motor and the second electric motor so that the total efficiency of the electric motor assembly 20 is optimal. The controller 17 determines a required parameter of the electric motor assembly 20 according to the load of the output shaft 141, where the required parameter includes at least one of required torque, a required rotational speed, and required power. The output parameter includes at least one of output torque, an output rotational speed, and output power, and the ratio of output parameters includes at least one of the ratio of output torque, the ratio of output rotational speeds, and the ratio of output power.

In this example, the required torque of the electric motor assembly is used as an example.

According to a principle that the first electric motor 21 and the second electric motor 22 can be in the high efficiency intervals of operation of the electric motors, total required output torque is distributed to the first electric motor 21 and the second electric motor 22. An efficiency interval of the first electric motor 21, an efficiency interval of the second electric motor 22, and an efficiency interval of the electric motor assembly 20 are determined through table lookup or measured in advance, and through first-order, second-order, or higher-order operations or first-order, second-order, or higher-order derivatives, proportional coefficient values of the first electric motor and the second electric motor or a proportional coefficient set of the first electric motor and the second electric motor that maximizes the efficiency of the electric motor assembly 20 is obtained, which constitutes the load distribution coefficient of the electric motor assembly.

**In** some examples, the load distribution coefficient includes at least one of a load distribution coefficient of the first electric motor and a load distribution coefficient of the second electric motor. After the total required output torque of the electric motor assembly 20 is determined, the load distribution coefficient of the first electric motor is determined by looking up a load distribution coefficient table, and the required torque of the electric motor assembly 20 is multiplied by the load distribution coefficient of the first electric motor to obtain required torque of the first electric motor. Required torque of the second electric motor may be obtained by a difference between the required torque of the electric motor assembly 20 and the required torque of the first electric motor, by a product of the required torque of the electric motor assembly 20 and (1-the load distribution coefficient of the first electric motor), or by a product of the required torque of the electric motor assembly 20 and the load distribution coefficient of the second electric motor obtained by looking up the table.

In this example, the load distribution coefficient is stored in a memory unit of the controller 17. At least one of the load distribution coefficient of the first electric motor and the load distribution coefficient of the second electric motor is stored in the memory unit of the controller 17. In some examples, a correspondence relationship between the load distribution coefficient and the load parameter of the output mechanism and the load distribution coefficient are stored in the memory unit of the controller.

The load parameter of the output mechanism includes at least one of output torque, an output rotational speed, and an output current. Output torque of the first electric motor and output torque of the second electric motor are reasonably distributed according to a required load value and the load distribution coefficient to ensure a long high efficiency interval of the electric motor assembly. Meanwhile, the battery life and service life of a battery are guaranteed. Moreover, a control method of the present application is simple, reliable, and robust.

In some examples, the controller 17 is configured to configure, according to the load parameter of the output mechanism, the output parameter value of the first electric motor and the output parameter value of the second electric motor or the ratio of the output torque of the first electric motor to the output parameter of the second electric motor so that the ratio of the efficiency interval of the electric motor assembly greater than or equal to 70% to the total efficiency interval of the electric motor assembly is greater than or equal to 0.5. That is to say, the controller 17 stores the efficiency interval of the first electric motor 21, the efficiency interval of the second electric motor 22, and the efficiency interval of the electric motor assembly 20 and determines the total required output torque of the electric motor assembly 20 according to the load parameter value or load value of the output shaft 141. According to the pre-stored efficiency interval of the first electric motor 21, efficiency interval of the second electric motor 22, and efficiency interval of the electric motor assembly 20, the controller 17 calculates, in real time, the output torque value of the first electric motor 21 and the output torque value of the second electric motor 22 that maximize the efficiency of the electric motor assembly. In some examples, the ratio of an efficiency interval of the electric motor assembly greater than or equal to 75% to the total efficiency interval of the electric motor assembly is made greater than or equal to 0.5.

A combination of the first electric motor capable of outputting the first torque and the first rotational speed and the second electric motor capable of outputting the second torque and the second rotational speed is used, the connector is used to selectively start the first electric motor, the second electric motor, or both the first electric motor and the second electric motor, and running states of the first electric motor and the second electric motor are controlled separately so that a torque range of the electric motor assembly where the efficiency is greater than or equal to 70% is greater than that of the first electric motor working alone or the second electric motor working alone, thereby expanding a high-efficiency output range of the electric tool and enabling high-efficiency operation under various conditions. The torque range of the electric motor assembly where the efficiency is greater than or equal to 70% is the high efficiency interval of the electric motor assembly, where the high efficiency interval is long and accounts for a large proportion.

In this example, the controller 17 includes a first controller 17a and a second controller 17b, that is, dual-MCU control. The first controller 17a is connected to the first electric motor 21, and the second controller 17b is connected to the second electric motor 22. The first controller 17a is communicatively connected to the second controller 17b. In some examples, the first controller 17a and the second controller 17b may be combined into one controller 17, that is, single-MCU control, to control both the first electric motor 21 and the second electric motor 22. Alternatively, in some examples, more than two controllers are included, that is, multi-MCU control.

In this example, the controller 17 is configured to, when determining that the first electric motor 21 or the second electric motor 22 in the electric motor assembly 20 is started and the total required output torque of the electric motor assembly 20 is greater than first preset torque, switch the electric motor assembly 20 to startup of both the first electric motor 21 and the second electric motor 22. After a preset time since the first electric motor 21 and the second electric motor 22 are started, the output torque value of the first electric motor 21 and the output torque value of the second electric motor 22 or the ratio of the output torque of the first electric motor 21 to the output torque of the second electric motor 22 is controlled according to a first set parameter and the load distribution coefficient of the electric motor assembly. One of the first electric motor and the second electric motor is controlled through a first parameter set and the other of the first electric motor and the second electric motor is controlled through a second parameter set, where the first parameter set and the second parameter set have at least one different parameter. In this example, the first electric motor is controlled using the first parameter set, and the first parameter set includes the rotational speed and current of the electric motor. The electric motor adopts closed-loop control so that the electric motor is controlled more accurately. The second electric motor is controlled using the second parameter set, and the second parameter set includes the current of the electric motor. The electric motor adopts the closed-loop control so that the electric motor is controlled more accurately.

In this example, the controller 17 is configured to, when determining that both the first electric motor 21 and the second electric motor 22 in the electric motor assembly 20 are started and the total required output torque of the electric motor assembly 20 is less than second preset torque, switch the electric motor assembly 20 to startup of the first electric motor 21 or the second electric motor 22. In some examples, the controller 17 controls and selects, according to the load distribution coefficient of the electric motor assembly, the startup of the first electric motor 21 or the second electric motor 22 in the electric motor assembly 20. According to the principle that the first electric motor 21 or the second electric motor 22 can be in the high efficiency interval of operation of the electric motor, the first electric motor 21 or the second electric motor 22 is selected to start according to the load distribution coefficient corresponding to the total required output torque.

A second preset value is less than a first preset value to prevent too frequent switching between a single-electric motor working state and a dual-electric motor working state of the electric motor assembly.

In this example, the load distribution coefficient of the electric motor assembly is input into the memory unit of the controller 17. At least one of the efficiency interval of the first electric motor 21, the efficiency interval of the second electric motor 22, and the efficiency interval of the electric motor assembly 20 is input into the memory unit of the controller 17.

After receiving distributed target torque, the first controller 17a and the second controller 17b may control the corresponding electric motors by a preset method. In some examples, the first controller 17a and the second controller 17b adopt vector control. In some examples, the first controller 17a and the second controller 17b control the running of the electric motors by different control methods. For example, the first controller 17a adopts vector control and the second controller 17b adopts direct torque control. Alternatively, the first controller 17a adopts direct torque control and the second controller 17b adopts vector control. Alternatively, the first controller 17a adopts vector control and the second controller 17b adopts square wave control. Alternatively, the first controller 17a adopts square wave control and the second controller 17b adopts vector control. Alternatively, the first controller 17a adopts square wave control and the second controller 17b adopts direct torque control. Alternatively, the first controller 17a adopts direct torque control and the second controller 17b adopts square wave control. The square wave control is a traditional control technology and is not described in detail here. Under the square wave control, the controller 17 may adjust pulse-width modulation (PWM), a conduction angle, or a lead angle according to the distributed target torque.

As shown in FIG. 12, in this example, the first electric motor 21 and the second electric motor 22 are each a three-phase brushless motor. The three-phase brushless motor includes electronically commutated three-phase stator windings U, V, and W. In some examples, the three-phase stator windings U, V, and W adopt a start connection. In some other examples, the three-phase stator windings U, V, and W adopt a delta connection. In an example, other types of brushless motors are within the scope of the present application. The brushless motor may include less than or more than three phases.

The electric tool further includes a driver circuit. The driver circuit is electrically connected to the stator windings U, V, and W of the electric motor and configured to transmit a current from the battery pack 61 to the stator windings U, V, and W to drive the electric motor to rotate. In this example, the electric tool includes a first driver circuit 171a and a second driver circuit 171b. The first driver circuit 171a is connected to the first controller 17a and the battery pack 61, and the second driver circuit 171b is connected to the second controller 17b and the battery pack 61. With the first driver circuit 171a as an example, the first driver circuit 171a includes multiple switching elements Q1, Q2, Q3, Q4, Q5, and Q6. A gate terminal of each switching element is electrically connected to the first controller 17a and used for receiving a control signal from the first controller 17a. A drain or source of each switching element is connected to the stator windings U, V, and W of the first electric motor 21. The switching elements Q1 to Q6 receive control signals from the first controller 17a to change their respective on states, thereby changing the current loaded by the battery pack 61 to the stator windings U, V, and W of the first electric motor 21. In an example, the first driver circuit 171a may be a three-phase bridge driver circuit including six controllable semiconductor power devices (such as field-effect transistors (FETs), bipolar junction transistors (BJTs), or insulated-gate bipolar transistors (IGBTs)). In some examples, the driver circuit may include more than six controllable semiconductor power devices. In an example, the switching elements may be any other types of solid-state switches, such as the IGBTs or the BJTs.

The controller 17 (including the first controller 17a and the second controller 17b) specifically controls on or off states of the switching elements in the driver circuit through the control chip. In some examples, the controller controls the ratio of an on time of a drive switch to an off time of the drive switch based on a PWM signal.

The electric tool further includes a detection assembly 18 for detecting the load parameter of the output mechanism. In this example, the load parameter is specifically a load parameter of the output shaft. The detection assembly 18 is formed on or connected to the controller 17. The detection assembly 18 detects a phase current, bus voltage, bus current, current holding time, demagnetization time, and other parameters in the driver circuit and sends these parameters to the controller 17 in the form of signals. In some examples, the detection assembly 18 detects the rotational speed of the electric motor, a commutation parameter of the electric motor, and the torque of the electric motor and sends them to the controller 17 in the form of signals.

FIG. 11 shows a control method for the electric tool. The electric tool includes the electric motor assembly 20 and the output mechanism 14 driven by the electric motor assembly 20, and the electric motor assembly 20 includes the first electric motor 21 and the second electric motor 22. The control method specifically includes the steps below.

In S200, the method starts.

In S210, according to an output rotational speed of the output mechanism, output torque T of the electric motor assembly 20 required for maintaining the current output rotational speed is determined.

In S220, it is determined that the first electric motor 21 or the second electric motor 22 in the electric motor assembly 20 is running currently. If so, S230 is performed. If not, S240 is performed.

The controller 17 determines, according to an electrical parameter such as a current or a voltage or a physical parameter, whether the electric motor assembly 20 is currently in single electric motor operation or dual electric motor operation.

In S230, it is determined that the output torque T of the electric motor assembly 20 is less than first preset torque T1. If so, S232 is performed. If not, S231 is performed.

The controller 17 pre-stores the appropriate first preset torque T1 as a threshold and compares the first preset torque T1 with the real-time output torque T.

In S231, the electric motor assembly 20 is switched to the startup of both the first electric motor 21 and the second electric motor 22, and S240 is performed.

After a preset time since the startup of both the first electric motor and the second electric motor is switched to, S240 is performed. Then, a dual electric motor control process begins. The preset time is a time for the electric motor to run stably and may be one or more commutation cycles of the electric motor or one or more complete waveform cycles of the current of the electric motor.

In S232, the output torque T of the electric motor assembly 20 is distributed to the electric motor currently in a running state.

In S250, the electric motor assembly 20 runs according to the output torque T, and a running mode of the electric motor assembly 20 is controlled through a current loop.

In S240, it is determined that the output torque T of the electric motor assembly 20 is greater than second preset torque T2. If so, S242 is performed. If not, S241 is performed.

In S241, the electric motor assembly 20 is switched to the startup of the first electric motor 21 or the second electric motor 22, and S230 is performed.

After the preset time since the startup of the first electric motor or the second electric motor, that is, the startup of a single electric motor, is switched to, S230 is performed. Then, a single electric motor control process begins. The preset time is a time for the electric motor to run stably and may be one or more commutation cycles of the electric motor or one or more complete waveform cycles of the current of the electric motor.

In S242, the total required output torque is distributed to the first electric motor 21 and the second electric motor 22 according to the output torque T of the electric motor assembly 20 and the load distribution coefficient of the electric motor assembly, and S250 is performed.

The load distribution coefficient ensures the optimal efficiency distribution between the first electric motor and the second electric motor so that the total efficiency of the electric motor assembly 20 is optimal. The ratio of the efficiency interval of the electric motor assembly 20 greater than or equal to 70% to the total efficiency interval of the electric motor assembly 20 is greater than or equal to 0.5. The total efficiency of the electric motor assembly 20 is greater than or equal to the efficiency of the first electric motor 21 or the second electric motor 22 in response to the same load of the output mechanism. The load distribution coefficient of the electric motor assembly 20 is obtained through table lookup. The efficiency interval of the first electric motor 21 and/or the efficiency interval of the second electric motor 22 and/or the efficiency interval of the electric motor assembly 20 are acquired by a table lookup method.

In some examples, the electric tool switches the running mode of the electric motor assembly 20 using a mechanical structure. For example, the electric tool may further include a mode switching switch for the user to operate, and the mode switching switch is connected to a control mechanism to switch the electric motor assembly 20 to the first working state or the second working state. In this manner, the user can autonomously operate the mode switching switch so that the user can autonomously control the electric motor assembly 20 to be in the first working state or the second working state. The controller 17 may identify the working state of the electric motor assembly 20 according to a signal sent by the mode switching switch. The user may autonomously control the working state of the electric motor assembly 20 by operating the mode switching switch so that the working state can be switched according to different requirements of the user, thereby improving the applicability of the electric tool.

In some examples, a connecting member of the electric tool switches the electric motor assembly 20 to the first working state or the second working state through a mechanical structure. For example, the connecting member is a one-way transmission structure, and at least one of the first electric motor 21 and the second electric motor 22 implements a rotational speed balance or torque balance with the one-way transmission structure. That is to say, for example, the one-way transmission structure operates synchronously with the second electric motor 22, and the one-way transmission structure is connected to the second electric motor 22 and is directly provided with a rotational speed balancing member. When the rotational speed of the second electric motor 22 exceeds a balanced rotational speed, the one-way transmission structure releases a limitation on the first electric motor 21 so that the first electric motor 21 and the second electric motor 22 rotate together. It is to be understood that a balanced state may also be achieved through torsion or a centrifugal force, which does not affect the substantive content of the present application.

In some examples, the electric tool includes both a mechanical mechanism and an electronic control mechanism for switching the working state of the electric motor assembly 20. Before the electric tool is started, the controller 17 cannot control the working state of the electric motor assembly 20. In this case, the user may select an appropriate working state through the mode switching switch, that is, select the startup of the first electric motor 21 or the second electric motor 22 or the startup of both the first electric motor and the second electric motor. After the electric tool is started, the controller 17 is powered on to control the working state of the electric tool.

Part of the technical solutions in the preceding examples may be used alone, or a combination of several technical solutions may be used, so as to improve the efficiency of the electric motor according to actual requirements.

It is to be interpreted that the "motor efficiency" refers to the ratio of output power (mechanical) to input power (electrical) and is generally expressed as a percentage. The output power (mechanical) is calculated using the required torque and speed. The input power (electrical) is calculated using the voltage and current supplied to the electric motor.

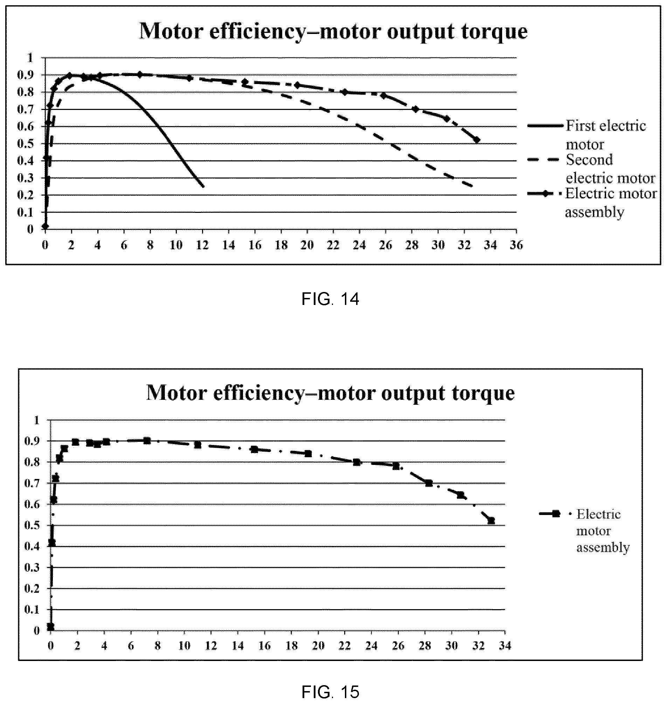

FIG. 14 is a graph showing motor efficiency and motor output torque of a first electric motor 21, a second electric motor 22, and an electric motor assembly 20 according to an example. The first electric motor 21 has low output torque. In the related art, the electric motor with low output torque has the following parameters: the outrunner has an outer diameter of φ 105 mm and a stack length of 15 mm, the stator windings of the electric motor have a wire diameter of φ 0.5 mm, 6 wires are wound in parallel, the number of turns is 18T, and a maximum value of the output torque is 12 N·m. It is to be interpreted that the "outer diameter of the electric motor" refers to the outer diameter of the entire electric motor. The "stack length of the electric motor" refers to the length of the stator core.

When a load is applied, that is, when the output torque is less than or equal to 1.86 N·m, the motor efficiency gradually increases. When the output torque reaches a first torque value (in this example, the first torque value is 0.37 N·m), the motor efficiency reaches 70% or more. When the output torque reaches a second torque value (in this example, the second torque value is 0.5 N·m), the motor efficiency reaches 75% or more. When the output torque is in a first maximum efficiency interval (greater than or equal to 1.86 N·m and less than or equal to 2.92 N·m in this example), the motor efficiency remains the highest. When the output torque exceeds a limit value of the first maximum efficiency interval (2.92 N·m in this example), the motor efficiency begins to decrease. When the output torque exceeds a third torque value (in this example, the third torque value is 6.9 N·m), the motor efficiency is less than 75%. When the output torque exceeds a fourth torque value (in this example, the fourth torque value is 7.7 N·m), the motor efficiency is less than 70%. In this example, for the electric motor with low output torque, an output torque interval where the motor efficiency is greater than 50% is greater than or equal to 0.2 N·m and less than or equal to 9.3 N·m. A first output torque interval where the motor efficiency is greater than 70% is greater than or equal to the first torque value (0.37 N·m) and less than or equal to the fourth torque value (7.7 N·m). An output torque interval where the motor efficiency is greater than 75% is greater than or equal to the second torque value (0.5 N·m) and less than or equal to the third torque value (6.9 N·m).

The second electric motor 22 has high output torque. In this example, the electric motor with high output torque has the following parameters: the outrunner has an outer diameter of φ 105 mm and a stack length of 40 mm, the stator windings of the electric motor have a wire diameter of φ 0.63 mm, 9 wires are wound in parallel, the number of turns is 7T, and a maximum value of the output torque is 33 N·m.

When the output torque reaches a fifth torque value (in this example, the fifth torque value is 0.99 N·m), the motor efficiency reaches 70% or more. When the output torque reaches a sixth torque value (in this example, the sixth torque value is 1.1 N·m), the motor efficiency reaches 75% or more. When the output torque is in a second maximum efficiency interval (greater than or equal to 4.17 N·m and less than or equal to 11.0 N·m in this example), the motor efficiency remains the highest. When the output torque exceeds a limit value of the second maximum efficiency interval (11.0 N·m in this example), the motor efficiency begins to decrease. When the output torque exceeds a seventh torque value (in this example, the seventh torque value is 19.2 N·m), the motor efficiency is less than 75%. When the output torque exceeds an eighth torque value (in this example, the eighth torque value is 21 N·m), the motor efficiency is less than 70%. In this example, for the electric motor with high output torque, an output torque interval where the motor efficiency is greater than 50% is greater than or equal to 0.5 N·m and less than or equal to 25.8 N·m. A second output torque interval where the motor efficiency is greater than 70% is greater than or equal to the fifth torque value (0.99 N·m) and less than or equal to the eighth torque value (21 N·m). An output torque interval where the motor efficiency is greater than 75% is greater than or equal to the sixth torque value (1.1 N·m) and less than or equal to the seventh torque value (19.2 N·m).

FIGS. 14 and 15 are graphs showing motor efficiency and motor output torque of the electric motor assembly 20. When the electric motor assembly 20, that is, a combination of the first electric motor 21 and the second electric motor 22 is used, when the output torque reaches the first torque value (in this example, the first torque value is 0.37 N·m), the motor efficiency reaches 70% or more. When the output torque reaches the second torque value (in this example, the second torque value is 0.5 N·m), the motor efficiency reaches 75% or more. When the output torque is in a third maximum efficiency interval (greater than or equal to 1.86 N·m and less than or equal to 11.0 N·m in this example), the motor efficiency remains the highest. When the output torque exceeds the limit value of the second maximum efficiency interval (11.0 N·m in this example), the motor efficiency begins to decrease. When the output torque is greater than the seventh torque value (in this example, the seventh torque value is 19.2 N·m), the motor efficiency is still greater than 75%. When the output torque exceeds the eighth torque value (in this example, the eighth torque value is 21 N·m), the motor efficiency is still greater than 70%. In this example, for the electric motor assembly 20, an output torque interval where the motor efficiency is greater than 50% is greater than or equal to 0.2 N·m and less than or equal to 25.8 N·m. When the output torque of the electric motor assembly is greater than or equal to the first torque value (0.37 N·m) and less than or equal to the eighth torque value (21 N·m), working efficiency of the electric motor assembly is greater than or equal to 70%.

In this example, it is defined that when the working efficiency of the electric motor assembly is greater than or equal to 70%, the electric motor assembly is in a third output torque interval, where the third output torque interval covers at least the first output torque interval and the second output torque interval. In this example, a right limit value of the third output torque interval is greater than the eighth torque value. The combination of the first electric motor capable of outputting the first torque and the first rotational speed and the second electric motor capable of outputting the second torque and the second rotational speed is used, and the connector is used to selectively start the first electric motor, the second electric motor, or both the first electric motor and the second electric motor so that the torque range of the electric motor assembly where the efficiency is greater than or equal to 70% is greater than that of the first electric motor working alone or the second electric motor working alone, thereby expanding the high-efficiency output range of the electric tool and enabling the high-efficiency operation under various conditions.

When the output torque of the electric motor assembly is greater than or equal to the second torque value (0.5 N·m) and less than or equal to the seventh torque value (19.2 N·m), the motor efficiency of the electric motor assembly is greater than 75%.

When the first electric motor 21 and the second electric motor 22 work simultaneously, a maximum value of the output torque of the first electric motor 21 and the second electric motor 22 is greater than or equal to a sum of maximum output torque of the first electric motor and maximum output torque of the second electric motor.

Limit values of efficiency of the electric motor assembly 20 constitute the total efficiency interval, and efficiency values of the electric motor assembly 20 greater than or equal to 70% constitute the first efficiency interval, where the ratio of the first efficiency interval to the total efficiency interval is greater than or equal to 0.5. In other examples, the ratio of the first efficiency interval to the total efficiency interval is greater than or equal to 0.6. In other examples, the ratio of the first efficiency interval to the total efficiency interval is greater than or equal to 0.7. **In** other examples, the ratio of the first efficiency interval to the total efficiency interval is greater than or equal to 0.8. **In** other examples, the ratio of the first efficiency interval to the total efficiency interval is greater than or equal to 0.9. Efficiency values of the electric motor assembly 20 greater than or equal to 50% constitute a second efficiency interval, where the ratio of the first efficiency interval to the second efficiency interval is greater than or equal to 0.4. **In** other examples, the ratio of the first efficiency interval to the second efficiency interval is greater than or equal to 0.5. **In** other examples, the ratio of the first efficiency interval to the second efficiency interval is greater than or equal to 0.6. **In** other examples, the ratio of the first efficiency interval to the second efficiency interval is greater than or equal to 0.7. A proportion of the high efficiency interval of the electric motor assembly is increased.

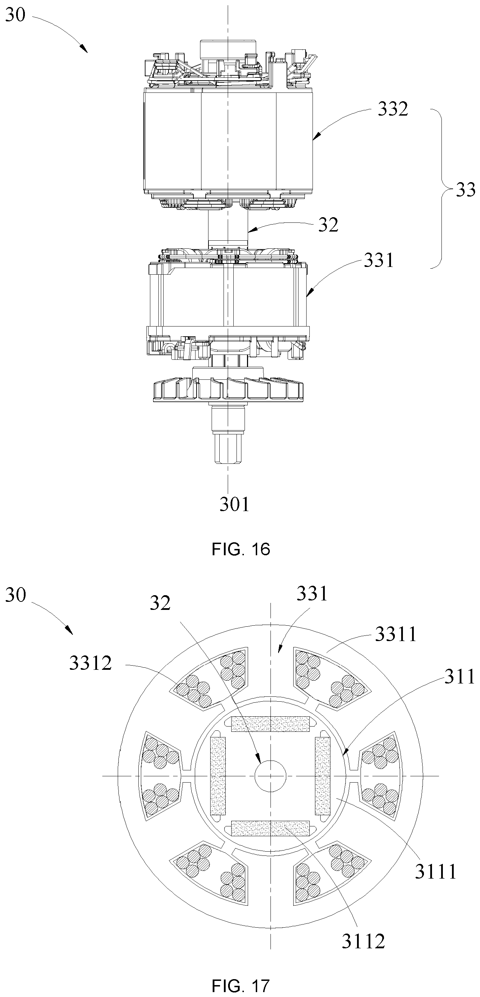

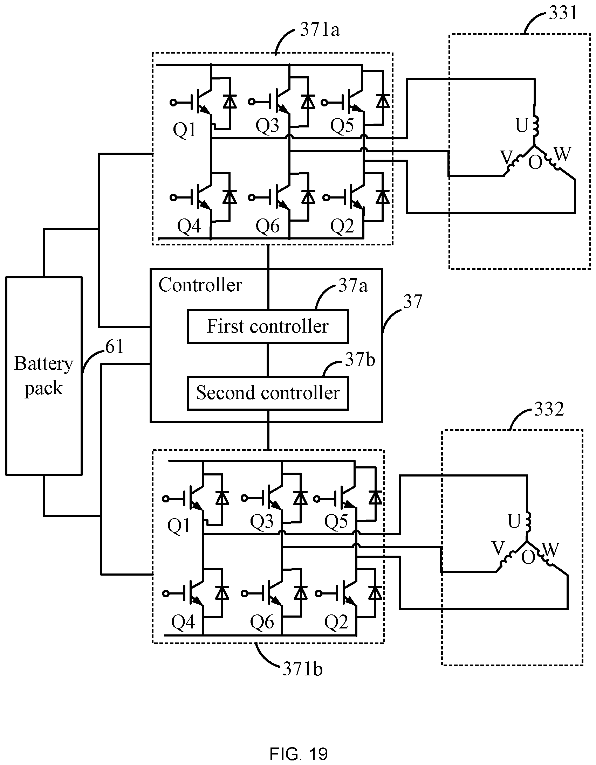

As shown in FIGS. 16 to 19, an electric tool is disclosed in this example. Components of this example the same as or corresponding to those of example one use the corresponding reference numerals or names in example one. For simplicity, only differences between example two and example one are described. A difference between the electric tool of this example and that of example one lies in the structure of an electric motor.

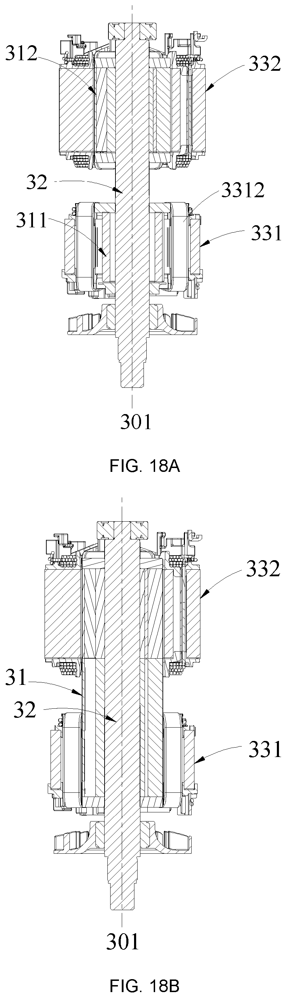

In this example, the electric tool includes an electric motor 30. The electric motor 30 includes a rotor assembly 31 and a stator assembly 33. For an outrunner, a rotor is sleeved on the outer side of a stator. For an inrunner, the stator is sleeved on the outer side of the rotor. In this example, the electric motor 30 is the inrunner. The rotor assembly 31 includes at least one rotor body. As shown in FIG. 18A, the rotor assembly includes a first rotor 311 and a second rotor 312, and the first rotor 311 and the second rotor 312 are disposed at two ends of a rotor shaft 32 one to one. The rotor shaft 32 is formed on or connected to the first rotor 311 or the second rotor 312. Structural forms of the first rotor 311 and the second rotor 312 are basically the same. With the first rotor 311 as an example, as shown in FIG. 17, the first rotor 311 includes a rotor core 3111 and permanent magnets 3112 on the rotor core 3111, where the permanent magnets 3112 are arranged at intervals along a circumferential direction of the rotor core 3111 and configured to generate a magnetic field. The rotor shaft 32 is formed on or connected to the first rotor 311 and configured to output power, and the rotor shaft 32 rotates around a first axis 301. In this example, the first rotor 311 and the second rotor 312 may have the same or different dimensional characteristics. For example, the first rotor 311 and the second rotor 312 may have different numbers of permanent magnets, or the first rotor 311 and the second rotor 312 may have different diameters of the rotor core. Specific dimensions and values may be set according to actual situations and are not specifically limited here.

The stator assembly 33 includes a first stator 331 and a second stator 332. Structural forms of the first stator 331 and the second stator 332 are basically the same. With the first stator 331 as an example, the stator includes a stator core 3311 and coil windings 3312 on the stator core 3311, where the coil windings 3312 are windings of conductive metal, such as copper windings. In this example, the first stator 331 and the second stator 332 each include electronically commutated three-phase stator windings U, V, and W. In some examples, the three-phase stator windings U, V, and W adopt a start connection. In some other examples, the three-phase stator windings U, V, and W adopt a delta connection. However, in an example, other types of stator windings are within the scope of the present application. The stator windings may include less than or more than three phases.

The electric tool further includes a controller 37 and a driver circuit. The controller 37 is configured to control the electric motor 30, that is, control energized states of the first stator and the second stator. The driver circuit is electrically connected to the stator windings U, V, and W and configured to transmit a current from a battery pack 61 to U, V, and W of the stator windings 3312 to drive the electric motor to rotate. The driver circuit includes multiple switching elements Q1, Q2, Q3, Q4, Q5, and Q6. A gate terminal of each switching element is electrically connected to the controller 37 and configured to receive a control signal from the controller 37. A drain or source of each switching element is connected to the stator windings U, V, and W. The switching elements Q1 to Q6 receive control signals from the controller 37 to change their respective on states, thereby changing the current loaded by the battery pack 61 to the stator windings U, V, and W. In an example, the driver circuit may be a three-phase bridge driver circuit including six controllable semiconductor power devices (such as FETs, BJTs, or IGBTs). In some examples, the driver circuit may include more than six controllable semiconductor power devices. In an example, the switching elements may be any other types of solid-state switches, such as the IGBTs or the BJTs.

The controller 37 is disposed on a control circuit board including a printed circuit board (PCB) and a flexible printed circuit (FPC) board. The controller 37 adopts a dedicated control chip, for example, a single-chip microcomputer or an MCU. It is to be noted that the control chip may be integrated into the controller 37 or may be disposed independently of the controller 37. A structural relationship between a driver chip and the controller 37 is not limited in this example.

Specifically, the controller 37 controls on or off states of the switching elements in the driver circuit through the control chip. In some examples, the controller 37 controls the ratio of an on time of a drive switch to an off time of the drive switch based on a PWM signal. The driver circuit includes a first driver circuit 371a and a second driver circuit 371b. The first driver circuit 371a is connected to the first stator 331, and the second driver circuit 371b is connected to the second stator 332. The controller 37 controls both the first driver circuit 371a and the second driver circuit 371b according to a setting. In some examples, the controller 37 includes a first controller 37a and a second controller 37b which are connected to the first driver circuit 371a and the second driver circuit 371b, respectively.

In this example, the controller 37 is configured to determine the energized states of the first stator 331 and the second stator 332 according to a principle of optimal efficiency and a load of an output mechanism. In this manner, no matter which load condition the electric tool is under, the electric motor can be distributed with appropriate input power and output appropriate output torque. The working efficiency under all conditions can be improved.

In this example, the first stator 331 and the second stator 332 have at least one different structural parameter, such as at least one of the outer diameter of the stator core, the inner diameter of the stator core, the thickness of a stator pole, and a parameter of a coil winding. Therefore, when the first stator 331 and the second stator 332 are energized alone, the electric motor 30 has different output load ranges. For example, when the first stator 331 is energized and the second stator 332 is de-energized, the electric motor 30 is in a first working state corresponding to a light load state. When the first stator 331 is de-energized and the second stator 332 is energized, the electric motor 30 is in a second working state corresponding to a medium load state. When the first stator 331 is energized and the second stator 332 is energized, the electric motor 30 is in a third working state corresponding to a heavy load state.

Limit values of motor efficiency of the electric motor 30 in all the working states constitute a total efficiency interval, and efficiency values of the electric motor 30 greater than or equal to 70% constitute a first efficiency interval, where the ratio of the first efficiency interval to the total efficiency interval is greater than or equal to 0.5. In other examples, the ratio of the first efficiency interval to the total efficiency interval is greater than or equal to 0.6. In other examples, the ratio of the first efficiency interval to the total efficiency interval is greater than or equal to 0.7. In other examples, the ratio of the first efficiency interval to the total efficiency interval is greater than or equal to 0.8. In other examples, the ratio of the first efficiency interval to the total efficiency interval is greater than or equal to 0.9. The electric motor including the first stator and the second stator is disposed, and the first stator and the second stator are in different energized and de-energized states to set different working states so that the ratio of the efficiency interval of the electric motor greater than or equal to 70% to the total efficiency interval is greater than or equal to 0.5, thereby expanding a high-efficiency output range of the electric tool and enabling high-efficiency operation under various conditions. A torque range of the electric motor assembly where the efficiency is greater than or equal to 70% is a high efficiency interval of the electric motor assembly, where the high efficiency interval is long and accounts for a large proportion.

In some examples, the limit values of motor efficiency of the electric motor 30 in all the working states constitute the total efficiency interval, and efficiency values of the electric motor 30 greater than or equal to 75% constitute a third efficiency interval, where the ratio of the third efficiency interval to the total efficiency interval is greater than or equal to 0.5. In other examples, the ratio of the third efficiency interval to the total efficiency interval is greater than or equal to 0.6. In other examples, the ratio of the third efficiency interval to the total efficiency interval is greater than or equal to 0.7. In other examples, the ratio of the third efficiency interval to the total efficiency interval is greater than or equal to 0.8. In other examples, the ratio of the third efficiency interval to the total efficiency interval is greater than or equal to 0.9.

In some examples, the first stator 331 and the second stator 332 are disposed one behind the other in an axial direction. The first stator 331 and the second stator 332 do not overlap in the axial direction.

The stator assembly 33 and the rotor assembly 31 are arranged with the first axis 301 as a central axis, that is, the stator assembly 33 and the rotor assembly 31 are coaxially arranged. The first stator 331 and the second stator 332 are coaxially arranged. In some examples, the first stator 331 and the second stator 332 are coaxially sleeved, that is, the first stator 331 and the second stator 332 are an inner stator and an outer stator, respectively. The first stator 331 includes a core of the first stator 331 and windings of the first stator 331, the second stator 332 includes a core of the second stator 332 and windings of the second stator 332, the number of slots of the first stator 331 is consistent with that of the second stator 332, the center of the slots of the first stator 331 corresponds to that of the second stator 332, and the center of teeth of the first stator 331 corresponds to that of the second stator 332. The driver circuit is electrically connected to the windings of the first stator 331 and the windings of the second stator 332. The windings of the first stator 331 and the windings of the second stator 332 are each controlled to be energized or de-energized so that the first stator 331 and the second stator 332 are each controlled to be energized or de-energized.

As shown in FIG. 18B, in some alternative examples, the rotor assembly 31 is an integral structure.

The electric motor 30 has two sets of stator windings. Each set of windings has a common three-phase structure so that the two sets of windings have multiple connection manners, for example, three common connection manners which are a series connection, a parallel connection, and independent control, respectively. Under a given bus voltage, if the electric motor 30 needs to work at a low speed and with high torque, that is, in a heavy load state, the windings need to be connected in series. If the electric motor 30 needs to work at a high speed and in a light load state, the windings need to be connected in parallel to reduce an internal back electromotive force and achieve speed expansion. If the electric motor works with relatively high safety and reliability, six-phase windings are independently controlled to increase phase redundancy. The switching between working modes may be implemented by a switch to achieve transitions during operation.

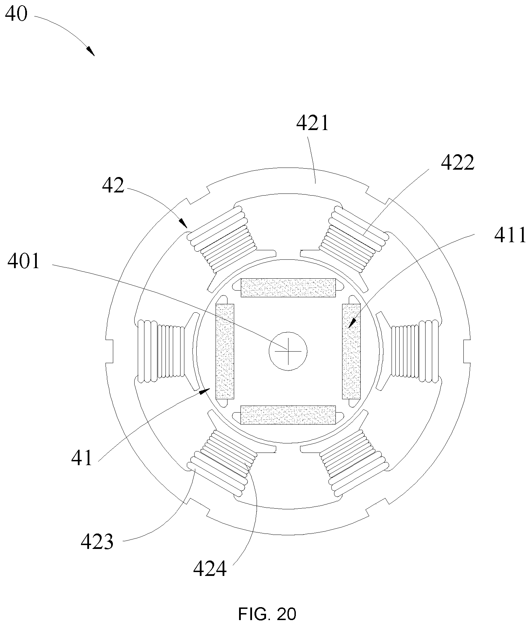

As shown in FIG. 20, an electric tool is disclosed in this example. Components of this example the same as or corresponding to those of example one use the corresponding reference numerals or names in example one. For simplicity, only differences between example three and example one are described. A difference between the electric tool of this example and that of example one lies in the structure of an electric motor.

An electric motor 40 includes a rotor 41 and a stator 42. The rotor 41 rotates around a first axis 401. The stator 42 includes a ring yoke portion 421, tooth portions 422, first windings 423, and second windings 424. The tooth portions 422 are formed on or connected to the ring yoke portion 421. The tooth portions 422 protrude from the inner side or outer side of the ring yoke portion 421. Multiple tooth portions 422 are provided. The first windings 423 are wound around the multiple tooth portions 422 and configured to generate a first magnetic field. The second windings 424 are wound around the multiple tooth portions 422 and configured to generate a second magnetic field. A battery pack 61 supplies power to the first windings 423 and the second windings 424. A first winding 423 and a second winding 424 are arranged along a radial direction of the first axis 401. The electric motor including the first windings and the second windings is disposed, the same power supply supplies power to the first windings and the second windings, and the first winding and the second winding are radially arranged so that each tooth portion of the stator includes the same winding form. The structure of the electric motor has high versatility, reducing a manufacturing cost. The number of tooth portions of the electric motor does not need to be additionally limited.

The battery pack 61 supplies power to the first windings 423 and the second windings 424. The nominal voltage of the electric tool is greater than or equal to 18 V. The battery pack 61 supplies power to the first windings 423 and the second windings 424 in collaboration with a corresponding power supply circuit. In some examples, the nominal voltage of the electric tool is greater than or equal to 36 V and less than or equal to 56 V. In some examples, the nominal voltage of the electric tool is greater than 56 V and less than or equal to 120 V.

The electric tool further includes a controller and a driver circuit. The controller is configured to control the electric motor, that is, control energized states of the first windings 423 and the second windings 424. The driver circuit is electrically connected to the first windings 423 and the second windings 424. The driver circuit is electrically connected to the first windings U, V, and W and configured to transmit a current from the battery pack 61 to the first windings U, V, and W to drive the electric motor to rotate. The driver circuit is electrically connected to the second windings U, V, and W and configured to transmit a current from the battery pack 61 to the second windings U, V, and W to drive the electric motor to rotate. The driver circuit includes multiple switching elements Q1, Q2, Q3, Q4, Q5, and Q6. A gate terminal of each switching element is electrically connected to the controller and used for receiving a control signal from the controller. A drain or source of each switching element is connected to the windings U, V, and W. The switching elements Q1 to Q6 receive control signals from the controller to change their respective on states, thereby changing the current loaded by the battery pack 61 to the windings U, V, and W. In an example, the driver circuit may be a three-phase bridge driver circuit including six controllable semiconductor power devices (such as FETs, BJTs, or IGBTs). In some examples, the driver circuit includes more than six controllable semiconductor power devices. In an example, the switching elements may be any other types of solid-state switches, such as the IGBTs or the BJTs.

In this example, the controller is configured to determine the energized states of the first windings and the second windings according to a principle of optimal efficiency and a load of an output mechanism. In this manner, no matter which load condition the electric tool is under, the electric motor can be distributed with appropriate input power and output appropriate output torque. The working efficiency under all conditions can be improved.

In this example, the first winding and the second winding have at least one different structural parameter, such as at least one of a wire diameter of the winding, the number of turns of the winding, the number of parallel wires of the winding, the shape of a cross-section of the winding, and a slot fill factor of the winding. Therefore, when the first windings 423 and the second windings 424 are energized alone, the electric motor has different output load ranges. For example, when the first windings 423 are energized and the second windings 424 are de-energized, the electric motor 40 is in a first working state corresponding to a light load state. When the first windings 423 are de-energized and the second windings 424 are energized, the electric motor 40 is in a second working state corresponding to a medium load state. When the first windings 423 are energized and the second windings 424 are energized, the electric motor 40 is in a third working state corresponding to a heavy load state. The first winding and the second winding are radially arranged and their different energized states may be controlled so that different output load states of the electric motor can be achieved, and the electric motor is applicable to more conditions.

The electric motor 40 further includes a detection circuit configured to detect energized and de-energized states of the first windings 423 and the second windings 424.

In this example, the electric motor 40 is a direct current brushless inrunner 40. Of course, the electric motor 40 may be an outrunner 40.

The rotor 41 is configured to rotate around the first axis 401. The rotor 41 is provided with permanent magnets 411 configured to generate a magnetic field, and permanent magnet slots are arranged at intervals along a circumferential direction of the first axis 401 and configured to hold the permanent magnets 411 capable of generating or inducing the magnetic field. The rotor 41 is sleeved within the stator 42 and a radial gap is formed between the rotor 41 and the stator 42.

The first windings 423 are configured to generate a first magnetic field under the action of the power supply and the second windings 424 are configured to generate a second magnetic field overlapping the first magnetic field under the action of the power supply. The first winding 423 and the second winding 424 are arranged along the radial direction of the first axis 401.

With the first winding 423 and the second winding 424 as an example, the first winding 423 and the second winding 424 are arranged in sequence on the same tooth portion 422 along the radial direction of the first axis 401. An insulating layer is disposed between the first winding 423 and the second winding 424 to isolate mutual interference of the two magnetic fields.

It is to be noted that the same tooth portion 422 here includes the same multiple tooth portions 422 and the same single tooth portion 422.

In this manner, several first windings 423 are connected to each other in series or in parallel to form three voltage input ends to be connected to the battery pack 61. Several second windings 424 are connected to each other in series or in parallel to form another three voltage input ends to be connected to an energy storage device.

In this example, the number of turns of the first winding 423 is different from the number of turns of the second winding 424. In some examples, the wire diameter of the first winding 423 is different from the wire diameter of the second winding 424. In some examples, the number of turns and the wire diameter of the first winding 423 are different from those of the second winding 424.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric tool, comprising:
a housing;
an output mechanism for driving a function element that implements a set function; and
an electric motor assembly disposed at least partially in the housing and comprising:
a first electric motor for outputting first torque and a first rotational speed;
a second electric motor for outputting second torque and a second rotational speed; and
a connector selectively allowing power transmission between the first electric motor and the second electric motor so that the electric motor assembly switches between a plurality of working states;
wherein the output mechanism is connected to at least one of the first electric motor, the second electric motor, and the connector; and
limit values of efficiency of the electric motor assembly constitute a total efficiency interval, and efficiency values of the electric motor assembly greater than or equal to 70% constitute a first efficiency interval, and a ratio of the first efficiency interval to the total efficiency interval is greater than or equal to 0.5.

2. The electric tool according to claim 1, wherein efficiency values of the electric motor assembly greater than or equal to 50% constitute a second efficiency interval, and a ratio of the first efficiency interval to the second efficiency interval is greater than or equal to 0.4.

3. The electric tool according to claim 1, wherein the connector comprises a one-way transmission assembly, the one-way transmission assembly connects two of the output mechanism, the first electric motor, and the second electric motor, the one-way transmission assembly allows at least one of the first electric motor and the second electric motor to drive the output mechanism, and the one-way transmission assembly prevents the output mechanism from driving the first electric motor or the second electric motor.

4. The electric tool according to claim 1, wherein the connector comprises a clutch assembly, the clutch assembly comprises a driving member formed on or connected to one of the first electric motor and the second electric motor and a driven member formed on or connected to another of the first electric motor and the second electric motor, and the driving member is selectively connected to the driven member.

5. The electric tool according to claim 1, wherein the connector comprises a clutch assembly, the clutch assembly comprises a first clutch connected to one of the first electric motor and the second electric motor and a second clutch connected to another of the first electric motor and the second electric motor, and the first clutch is selectively connected to the second clutch.

6. The electric tool according to claim 1, wherein the connector comprises a differential assembly that allows the first electric motor and the second electric motor to simultaneously output power to the output mechanism at different rotational speeds.

7. The electric tool according to claim 1, further comprising a transmission assembly for connecting the electric motor assembly to the output mechanism.

8. The electric tool according to claim 1, further comprising a controller configured to control a ratio of output torque of the first electric motor to output torque of the second electric motor according to a first set parameter.

9. The electric tool according to claim 8, further comprising a detection mechanism for detecting the first set parameter, wherein the first set parameter comprises a load parameter of the output mechanism.

10. An electric tool, comprising:
a housing;
an output mechanism for driving a function element that implements a set function; and
an electric motor assembly disposed at least partially in the housing and comprising:
a first electric motor for outputting first torque and a first rotational speed;
a second electric motor for outputting second torque and a second rotational speed; and
a connector selectively allowing power transmission between the first electric motor and the second electric motor;
wherein the output mechanism is connected to at least one of the first electric motor, the second electric motor, and the connector;
when output torque of the first electric motor is greater than or equal to a first torque value and less than or equal to a fourth torque value, working efficiency of the first electric motor is greater than or equal to 70%;
when output torque of the second electric motor is greater than or equal to a fifth torque value and less than or equal to an eighth torque value, working efficiency of the second electric motor is greater than or equal to 70%;
the first torque value is less than the fifth torque value and the fourth torque value is less than the eighth torque value; and
when output torque of the electric motor assembly is greater than or equal to the first torque value and less than or equal to the eighth torque value, working efficiency of the electric motor assembly is greater than or equal to 70%.

11. The electric tool according to claim 10, wherein when the output torque of the first electric motor is greater than or equal to a second torque value and less than or equal to a third torque value, the working efficiency of the first electric motor is greater than or equal to 75%; when the output torque of the second electric motor is greater than or equal to a sixth torque value and less than or equal to a seventh torque value, the working efficiency of the first electric motor is greater than or equal to 75%; the second torque value is less than the sixth torque value and the third torque value is less than the seventh torque value; and when the output torque of the electric motor assembly is greater than or equal to the second torque value and less than or equal to the seventh torque value, the working efficiency of the electric motor assembly is greater than or equal to 75%.

12. An electric tool, comprising:
a housing;
an output mechanism for driving a function element that implements a set function; and
an electric motor assembly disposed at least partially in the housing and comprising:
a first electric motor for outputting first torque and a first rotational speed;
a second electric motor for outputting second torque and a second rotational speed; and
a connector selectively allowing power transmission between the first electric motor and the second electric motor; wherein the output mechanism is connected to at least one of the first electric motor, the second electric motor, and the connector;
when working efficiency of the first electric motor is greater than or equal to 70%, output torque of the first electric motor is within a first output torque interval;
when working efficiency of the second electric motor is greater than or equal to 70%, output torque of the second electric motor is within a second output torque interval; and
when working efficiency of the electric motor assembly is greater than or equal to 70%, output torque of the electric motor assembly is within a third output torque interval, wherein the third output torque interval covers at least the first output torque interval and the second output torque interval.

13. An electric tool, comprising:
a housing;
an output mechanism for driving a function element that implements a set function;
a power supply mounting portion for mounting a direct current power supply; and
an electric motor assembly disposed at least partially in the housing and comprising:
a first electric motor for outputting first torque and a first rotational speed and driving the output mechanism; and
a second electric motor for outputting second torque and a second rotational speed and driving the output mechanism;
wherein the direct current power supply supplies power to the first electric motor and the second electric motor, and a nominal voltage of the electric tool is greater than or equal to 18 V.

14. The electric tool according to claim 13, wherein the first electric motor and the second electric motor are each a brushless motor.

15. The electric tool according to claim 13, wherein the direct current power supply comprises a battery pack.

16. The electric tool according to claim 15, wherein the battery pack supplies power to various electric tools.

17. The electric tool according to claim 13, wherein the nominal voltage of the electric tool is greater than or equal to 18 V and less than or equal to 56 V.

18. The electric tool according to claim 13, wherein the nominal voltage of the electric tool is greater than 56 V and less than or equal to 120 V.

19. The electric tool according to claim 13, wherein the power supply mounting portion is disposed at least partially on the housing.

20. An electric tool, comprising:
a housing;
an output mechanism for driving a function element that implements a set function, wherein the output mechanism is disposed at least partially in the housing;
a power supply mounting portion for mounting a direct current power supply; and
an electric motor assembly used for driving the output mechanism and comprising:
a first electric motor for outputting first torque and a first rotational speed; and
a second electric motor for outputting second torque and a second rotational speed; wherein the first electric motor and the second electric motor are configured to have at least one different structural parameter.

21. The electric tool according to claim 20, wherein the first electric motor and the second electric motor have different outer diameters.

22. The electric tool according to claim 21, wherein a ratio of an outer diameter of the first electric motor to an outer diameter of the second electric motor is greater than or equal to 0.4.

23. The electric tool according to claim 20, wherein the first electric motor and the second electric motor have different stack lengths.

24. The electric tool according to claim 23, wherein a ratio of a stack length of the first electric motor to a stack length of the second electric motor is greater than or equal to 0.3.

25. The electric tool according to claim 20, wherein the structural parameter comprises an outer diameter of a stator core, an inner diameter of the stator core, an outer diameter of a rotor core, an inner diameter of the rotor core, a thickness of a rotor pole, a thickness of a stator pole, a length of an air gap, a length of a core, a number of pairs of stator poles, an arc corresponding to the stator pole, a number of pairs of rotor poles, and an arc corresponding to the rotor pole.

26. An electric tool, comprising:
a housing;
an output mechanism for driving a function element that implements a set function;
an electric motor assembly disposed at least partially in the housing;
wherein the electric motor assembly comprises:
a first electric motor for outputting first torque and a first rotational speed;
a second electric motor for outputting second torque and a second rotational speed; and
a connector selectively allowing power transmission between the first electric motor and the second electric motor;
wherein the output mechanism is connected to at least one of the first electric motor, the second electric motor, and the connector;
a power supply for supplying power to the first electric motor and the second electric motor; and
a controller for controlling the electric motor assembly;
wherein the controller is configured to determine, according to a load parameter of the output mechanism and a load distribution coefficient of the electric motor assembly, at least one of an output parameter value of the first electric motor and an output parameter value of the second electric motor or a ratio of an output parameter of the first electric motor to an output parameter of the second electric motor.

27. The electric tool according to claim 26, further comprising a detection assembly for detecting the load parameter of the output mechanism.

28. The electric tool according to claim 26, wherein a required parameter of the electric motor assembly is determined according to the load parameter of the output mechanism, wherein the required parameter comprises at least one of required torque, a required rotational speed, and required power.

29. The electric tool according to claim 28, wherein the output parameter comprises at least one of output torque, an output rotational speed, and output power.

30. The electric tool according to claim 26, wherein the load distribution coefficient enables total efficiency of the electric motor assembly to be greater than or equal to efficiency of the first electric motor or the second electric motor in response to a same load of the output mechanism.

31. The electric tool according to claim 26, wherein the load distribution coefficient enables a ratio of an efficiency interval of the electric motor assembly greater than or equal to 70% to a total efficiency interval of the electric motor assembly to be greater than or equal to 0.5.

32. The electric tool according to claim 26, wherein the controller is configured to, when both the first electric motor and the second electric motor are started, control one of the first electric motor and the second electric motor through a first parameter set and control another of the first electric motor and the second electric motor through a second parameter set, wherein the first parameter set and the second parameter set have at least one different parameter.

33. The electric tool according to claim 27, wherein the controller is configured to, when determining that both the first electric motor and the second electric motor are started and a required parameter of the electric motor assembly is less than a second preset value, switch the electric motor assembly to startup of the first electric motor or the second electric motor.

34. The electric tool according to claim 26, wherein the controller is configured to, when determining that the first electric motor or the second electric motor in the electric motor assembly is started and a required parameter of the electric motor assembly is greater than a first preset value, switch the electric motor assembly to startup of both the first electric motor and the second electric motor.

35. An electric tool, comprising:
a housing;
an output mechanism for driving a function element that implements a set function;
an electric motor assembly disposed at least partially in the housing;
wherein the electric motor assembly comprises:
a first electric motor for outputting first torque and a first rotational speed;
a second electric motor for outputting second torque and a second rotational speed; and
a connector selectively allowing power transmission between the first electric motor and the second electric motor;
wherein the output mechanism is connected to at least one of the first electric motor, the second electric motor, and the connector;
a power supply for supplying power to the first electric motor and the second electric motor; and
a controller for controlling the electric motor assembly;
wherein the controller is configured to configure an output parameter of the first electric motor and an output parameter of the second electric motor according to a load parameter of the output mechanism such that a ratio of an efficiency interval of the electric motor assembly greater than or equal to 70% to a total efficiency interval of the electric motor assembly is greater than or equal to 0.5.
